# EUROPEAN PATENT APPLICATION

(11) **EP 4 521 713 A2**
(43) Date of publication of application: **12.03.2025**
(21) Application number: 25150493.2
(22) Date of filing: 05.05.2022
(51) Int. Cl.: H04L 65/10

(54) **REDUCED CAPACITY UES AND 5TH GENERATION CORE NETWORK INTERACTIONS**

(30) Priority: 06.05.2021 US 202163184840 P
(62) Divisional of application: 22730350.0
(71) Applicant: InterDigital Patent Holdings, Inc., Wilmington, DE 19809 (US)
(72) Inventor: STARSINIC, Michael, Wilmington, 19809 (US); ADJAKPLE, Pascal, Wilmington, 19809 (US); LI, Hongkun, Wilmington, 19809 (US); LY, Quang, Wilmington, 19809 (US); MLADIN, Catalina, Wilmington, 19809 (US)
(74) Representative: D Young & Co LLP

(57) **Abstract**

The present application at least describes an apparatus including a non-transitory memory including instructions stored thereon and a processor, operably coupled to the non-transitory memory, configured to execute as set of instructions. The set of instructions include determining a preference to operate in a reduced capacity (REDCAP) mode in a network. The set of instructions also include transmitting, via a radio resource control (RRC) message to a registration location on the network, a registration request to operate in the REDCAP mode. The registration request prompts a selection of an access and mobility function (AMF) configured to authorize the apparatus to operate in the REDCAP mode and communicate with the apparatus. The registration request prompts a session management function (SMF) to determine characteristics of a protocol data unit (PDU) session of the apparatus. The set of instructions also include receiving, from the network, a response to the registration request based on the AMF authorization and SMF determination.

## Description

### CROSS-REFERENCE TO RELATED APPLICATIONS

This application claims the benefit of priority of US Provisional application no 63/184,840 filed May 6, 2021, entitled, "Reduced Capacity UEs and 5^{th} Generation Core Network Interactions," the contents of which is incorporated by reference in its entirety.

### FIELD

The present application is directed to methods and systems for enhancing UE registration procedures in a network.

### BACKGROUND

Reduced capacity (REDCAP) UEs support enhancements generally aimed at reducing a UE's complexity, extending battery life, and reducing overall cost. Some enhancements may only be supported by REDCAP UEs and therefore should not be configured, or used by, non-REDCAP UEs. REDCAP UEs target applications such as Industrial Wireless Sensors, Video Surveillance and Wearable Devices.

Some REDCAP UEs may be deployed for applications operating on a stationary UE or occasionally stationary UE. To reduce overall UE power consumption, requirements to perform RRM may be reduced REDCAP UEs. Decisions about when and what RRM is needed is ultimately controlled by the RAN part of the network. However, the RAN part of the network may not be aware of a UE's status being stationary. What is desired in the art is for a core network to determine whether a UE is a REDCAP UE, whether the UE is stationary, and how to inform the RAN part of the network that the UE may be considered stationary so as to enable it to optimally configure/control the RRM.

TS 22.261 indicates 5G Systems require supporting, in constrained circumstances (e.g., reduced power supply), a minimal user experience (e.g., user experienced data rate of [100] kbps, E2E latency of 50 ms, lower availability of the network of 95%). Thus, what is desired in the art is an improved core network capable of determining when the UE is power constrained and take necessary actions accordingly.

A REDCAP UE may also be limited in its accessible services. However, any reduction or limitation on services the UE can access should consider what type of services are required by the UE. For example, TS 22.261 indicates, "The 5G system shall be able to give priority to services (e.g., e-Health) when resources are limited." Accordingly it is desired to create protocols of how the 5GC can use the UE's required services to determine if it is appropriate to reduce the level of services that are available to a UE. What is also desired in the art is an architecture where REDCAP UEs employ reduced services and means to optimally interact among each other with reduced or unavailable services.

### SUMMARY

This summary is provided to introduce a selection of concepts in a simplified form that are further described below in the Detailed Description. This Summary is not intended to limit the scope of the claimed subject matter. The foregoing needs are met, to a great extent, by the present application described herein, with aspects of the application are at least directed to the following aspects.

One aspect of the application may be directed to an apparatus including a non-transitory memory including instructions stored thereon and a processor, operably coupled to the non-transitory memory, configured to execute as set of instructions. The set of instructions includes determining a preference to operate in a reduced capacity (REDCAP) mode in a network. The set of instructions also includes transmitting a registration request including a first and second indication to operate in the REDCAP mode. The first indication prompts a selection of an access and mobility function (AMF) configured to authorize the REDCAP mode and communicate with an apparatus. The second indication is sent to a session management function (SMF) to prompt determining characteristics of a protocol data unit (PDU) session of the apparatus. The set of instructions also includes receiving, from the network, a response to the registration request based on the AMF authorization and SMF determination. This aspect may also include an accompanying method performing the above-mentioned instructions. This aspect may further include a non-transitory computer readable medium including program instructions that when executed by a processor effectuates the above-mentioned instructions.

Another aspect of the application may be directed to a method performed at a network. The method may include a step of receiving a registration request message from a wireless transmit/receive unit (WTRU). The method may also include a step of receiving an indication the WTRU is operating in a reduced capacity (REDCAP) mode. The method may even also include a step of sending, to a network function in the core network, a message requesting to check whether the WTRU is authorized to operate in the REDCAP mode. The method may further include a step of receiving, from the network function, a reply indicating an authorization status of the WTRU to operate in the REDCAP mode. The method may even further include a step of sending, to the WTRU, a registration response message based on the authorization to operate in the REDCAP mode. This aspect may also include an accompanying system including architecture capable of performing the above-mentioned instructions. This aspect may further include a non-transitory computer readable medium including program instructions that when executed by a processor effectuates the above-mentioned instructions.

### BRIEF DESCRIPTION OF THE DRAWINGS

In order to facilitate a more robust understanding of the application, reference is now made to the accompanying drawings, in which like elements are referenced with like numerals. These drawings should not be construed to limit the application and are intended only to be illustrative.
Figure 1A illustrates an exemplary communications system according to an aspect of the application.
Figure 1B illustrates an exemplary apparatus configured for wireless communication according to an aspect of the application.
Figure 1C illustrates a system diagram of a radio access network and a core network according to an aspect of the application.
Figure 1D illustrates a system diagram of a radio access network and a core network according to an aspect of the application.
Figure 1E illustrates a system diagram of a radio access network and a core network according to an aspect of the application.
Figure 1F illustrates a block diagram of an exemplary computing system in communication with one or more networks previously shown in Figures 1A, 1C, 1D and 1E according to an aspect of the application.
Figure 1G illustrates an exemplary communications system according to an aspect of the application.
Figure 2 illustrates a REDCAP UE registration procedure in accordance with an aspect of the application.
Figure 3 illustrates a REDCAP capability request procedure from RAN in accordance with an aspect of the application.
Figure 4 illustrates UE Trajectory indications in RRC Messaging in accordance with an aspect of the application.
Figure 5 illustrates UE Trajectory indications in NAS messaging in accordance with an aspect of the application.
Figure 6 illustrates UE battery level indications in RRC messaging in accordance with an aspect of the application.
Figure 7 illustrates UE battery level indications in NAS messaging in accordance with an aspect of the application.

### DETAILED DESCRIPTION OF THE ILLUSTRATIVE EMBODIMENTS

A detailed description of the illustrative embodiment will be discussed in reference to various figures, embodiments and aspects herein. Although this description provides detailed examples of possible implementations, it should be understood that the details are intended to be examples and thus do not limit the scope of the application.

Reference in this specification to "one embodiment," "an embodiment," "one or more embodiments," or the like means that a particular feature, structure, or characteristic described in connection with the embodiment is included in at least one embodiment of the disclosure. Moreover, the term "embodiment" in various places in the specification is not necessarily referring to the same embodiment. That is, various features are described which may be exhibited by some embodiments and not by the other. Reference in this specification to "one aspect," "an aspect," or "one or more aspects," or the like encompasses one or more embodiments listed thereunder.

### Definitions/Acronyms

Provided below are definitions for terms and phrases commonly used in this application in Table 1 below.

**Table 1**

| **Acronym** | **Term or Phrase** |
|---|---|
| 5GC | 5^{th} Generation Core Network |
| AMBR | Aggregate Maximum Bit Rate |
| AMF | Access and Mobility Function |
| AT | Attention |
| BD | Blind Decoding |
| DL | Downlink |
| DNN | Data Network Name |
| eDRX | Extended Discontinuous Transmission |
| e2e | End-to-End |
| FDD | Frequency Division Duplex |
| GBR | Guaranteed Bit Rate |
| GUI | Graphical User Interface |
| IoT | Internet of Things |
| MM | Mobility Management |
| MT | Mobile Termination |
| NAS | Non-Access Stratum |
| NSSAI | Network Slice Selection Assistance Information |
| NWDAF | Network Data Analytics Function |
| PDCCH | Physical Downlink Data Control Channel |
| PDR | Packet Detection Rule |
| PDU | Protocol Data Unit |
| QER | QoS Enforcement Rule |
| QFI | QoS Flow Identifier |
| QoS | Quality of Service |
| REDCAP | Reduced Capability UE |
| RRC | Radio Resource Control |
| RRM | Radio Resource Management |
| Rx | Receive |
| SD | Slice Differentiator |
| SIM | Subscriber Identity Module |
| SM | Session Management |
| SMF | Session Management Function |
| SST | Slice/Service Type |
| S-NSSAI | Single NSSAI |
| TE | Terminal Equipment |
| Tx | Transmission |
| UDM | User Data Management |
| UDR | User Data Repository |
| UE | User Equipment |
| UL | Uplink |
| UPF | User Plane Function |
| URL | Uniform Resource Locator |

### General Architecture

The 3rd Generation Partnership Project (3GPP) develops technical standards for cellular telecommunications network technologies, including radio access, the core transport network, and service capabilities - including work on codecs, security, and quality of service. Recent radio access technology (RAT) standards include WCDMA (commonly referred as 3G), LTE (commonly referred as 4G), LTE-Advanced standards, and New Radio (NR), which is also referred to as "5G". 3GPP NR standards development is expected to continue and include the definition of next generation radio access technology (new RAT), which is expected to include the provision of new flexible radio access below 7 GHz, and the provision of new ultra-mobile broadband radio access above 7 GHz. The flexible radio access is expected to consist of a new, non-backwards compatible radio access in new spectrum below 7 GHz, and it is expected to include different operating modes that may be multiplexed together in the same spectrum to address a broad set of 3GPP NR use cases with diverging requirements. The ultra-mobile broadband is expected to include cmWave and mmWave spectrum that will provide the opportunity for ultra-mobile broadband access for, e.g., indoor applications and hotspots. In particular, the ultra-mobile broadband is expected to share a common design framework with the flexible radio access below 7 GHz, with cmWave and mmWave specific design optimizations.

3GPP has identified a variety of use cases that NR is expected to support, resulting in a wide variety of user experience requirements for data rate, latency, and mobility. The use cases include the following general categories: enhanced mobile broadband (eMBB) ultra-reliable low-latency Communication (URLLC), massive machine type communications (mMTC), network operation (e.g., network slicing, routing, migration and interworking, energy savings), and enhanced vehicle-to-everything (eV2X) communications, which may include any of Vehicle-to-Vehicle Communication (V2V), Vehicle-to-Infrastructure Communication (V2I), Vehicle-to-Network Communication (V2N), Vehicle-to-Pedestrian Communication (V2P), and vehicle communications with other entities. Specific service and applications in these categories include, e.g., monitoring and sensor networks, device remote controlling, bi-directional remote controlling, personal cloud computing, video streaming, wireless cloud-based office, first responder connectivity, automotive ecall, disaster alerts, real-time gaming, multi-person video calls, autonomous driving, augmented reality, tactile internet, virtual reality, home automation, robotics, and aerial drones to name a few. All of these use cases and others are contemplated herein.

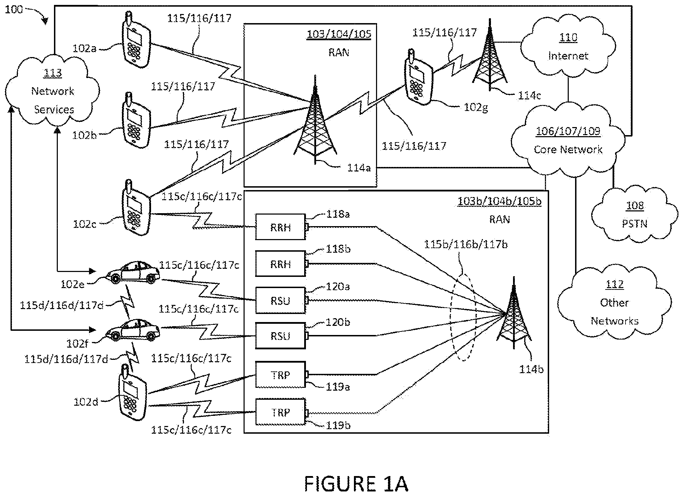

Figure 1A illustrates an example communications system 100 in which the systems, methods, and apparatuses described and claimed herein may be used. The communications system 100 may include wireless transmit/receive units (WTRUs) 102a, 102b, 102c, 102d, 102e, 102f, and/or 102g, which generally or collectively may be referred to as WTRU 102 or WTRUs 102. The communications system 100 may include, a radio access network (RAN) 103/104/105/103b/104b/105b, a core network 106/107/109, a public switched telephone network (PSTN) 108, the Internet 110, other networks 112, and Network Services 113. 113. Network Services 113 may include, for example, a V2X server, V2X functions, a ProSe server, ProSe functions, IoT services, video streaming, and/or edge computing, etc.

It will be appreciated that the concepts disclosed herein may be used with any number of WTRUs, base stations, networks, and/or network elements. Each of the WTRUs 102 may be any type of apparatus or device configured to operate and/or communicate in a wireless environment. In the example of Figure 1A, each of the WTRUs 102 is depicted in Figures 1A-1E as a hand-held wireless communications apparatus. It is understood that with the wide variety of use cases contemplated for wireless communications, each WTRU may comprise or be included in any type of apparatus or device configured to transmit and/or receive wireless signals, including, by way of example only, user equipment (UE), a mobile station, a fixed or mobile subscriber unit, a pager, a cellular telephone, a personal digital assistant (PDA), a smartphone, a laptop, a tablet, a netbook, a notebook computer, a personal computer, a wireless sensor, consumer electronics, a wearable device such as a smart watch or smart clothing, a medical or eHealth device, a robot, industrial equipment, a drone, a vehicle such as a car, bus or truck, a train, or an airplane, and the like.

The communications system 100 may also include a base station 114a and a base station 114b. In the example of Figure 1A, each base stations 114a and 114b is depicted as a single element. In practice, the base stations 114a and 114b may include any number of interconnected base stations and/or network elements. Base stations 114a may be any type of device configured to wirelessly interface with at least one of the WTRUs 102a, 102b, and 102c to facilitate access to one or more communication networks, such as the core network 106/107/109, the Internet 110, Network Services 113, and/or the other networks 112. Similarly, base station 114b may be any type of device configured to wiredly and/or wirelessly interface with at least one of the Remote Radio Heads (RRHs) 118a, 118b, Transmission and Reception Points (TRPs) 119a, 119b, and/or Roadside Units (RSUs) 120a and 120b to facilitate access to one or more communication networks, such as the core network 106/107/109, the Internet 110, other networks 112, and/or Network Services 113. RRHs 118a, 118b may be any type of device configured to wirelessly interface with at least one of the WTRUs 102, e.g., WTRU 102c, to facilitate access to one or more communication networks, such as the core network 106/107/109, the Internet 110, Network Services 113, and/or other networks 112.

TRPs 119a, 119b may be any type of device configured to wirelessly interface with at least one of the WTRU 102d, to facilitate access to one or more communication networks, such as the core network 106/107/109, the Internet 110, Network Services 113, and/or other networks 112. RSUs 120a and 120b may be any type of device configured to wirelessly interface with at least one of the WTRU 102e or 102f, to facilitate access to one or more communication networks, such as the core network 106/107/109, the Internet 110, other networks 112, and/or Network Services 113. By way of example, the base stations 114a, 114b may be a Base Transceiver Station (BTS), a Node-B, an eNode B, a Home Node B, a Home eNode B, a Next Generation Node-B (gNode B), a satellite, a site controller, an access point (AP), a wireless router, and the like.

The base station 114a may be part of the RAN 103/104/105, which may also include other base stations and/or network elements (not shown), such as a Base Station Controller (BSC), a Radio Network Controller (RNC), relay nodes, etc. Similarly, the base station 114b may be part of the RAN 103b/104b/105b, which may also include other base stations and/or network elements (not shown), such as a BSC, a RNC, relay nodes, etc. The base station 114a may be configured to transmit and/or receive wireless signals within a particular geographic region, which may be referred to as a cell (not shown). Similarly, the base station 114b may be configured to transmit and/or receive wired and/or wireless signals within a particular geographic region, which may be referred to as a cell (not shown). The cell may further be divided into cell sectors. For example, the cell associated with the base station 114a may be divided into three sectors. Thus, for example, the base station 114a may include three transceivers, e.g., one for each sector of the cell. The base station 114a may employ Multiple-Input Multiple Output (MIMO) technology and, therefore, may utilize multiple transceivers for each sector of the cell, for instance.

The base station 114a may communicate with one or more of the WTRUs 102a, 102b, 102c, and 102g over an air interface 115/116/117, which may be any suitable wireless communication link (e.g., Radio Frequency (RF), microwave, infrared (IR), ultraviolet (UV), visible light, cmWave, mmWave, etc.). The air interface 115/116/117 may be established using any suitable Radio Access Technology (RAT).

The base station 114b may communicate with one or more of the RRHs 118a and 118b, TRPs 119a and 119b, and/or RSUs 120a and 120b, over a wired or air interface 115b/116b/117b, which may be any suitable wired (e.g., cable, optical fiber, etc.) or wireless communication link (e.g., RF, microwave, IR, UV, visible light, cmWave, mmWave, etc.). The air interface 115b/116b/117b may be established using any suitable RAT.

The RRHs 118a, 118b, TRPs 119a, 119b and/or RSUs 120a, 120b, may communicate with one or more of the WTRUs 102c, 102d, 102e, 102f over an air interface 115c/116c/117c, which may be any suitable wireless communication link (e.g., RF, microwave, IR, ultraviolet UV, visible light, cmWave, mmWave, etc.) The air interface 115c/116c/117c may be established using any suitable RAT.

The WTRUs 102 may communicate with one another over a direct air interface 115d/116d/117d, such as Sidelink communication which may be any suitable wireless communication link (e.g., RF, microwave, IR, ultraviolet UV, visible light, cmWave, mmWave, etc.) The air interface 115d/116d/117d may be established using any suitable RAT.

The communications system 100 may be a multiple access system and may employ one or more channel access schemes, such as CDMA, TDMA, FDMA, OFDMA, SC-FDMA, and the like. For example, the base station 114a in the RAN 103/104/105 and the WTRUs 102a, 102b, 102c, or RRHs 118a, 118b,TRPs 119a, 119b and/or RSUs 120a and 120b in the RAN 103b/104b/105b and the WTRUs 102c, 102d, 102e, and 102f, may implement a radio technology such as Universal Mobile Telecommunications System (UMTS) Terrestrial Radio Access (UTRA), which may establish the air interface 115/116/117 and/or 115c/116c/117c respectively using Wideband CDMA (WCDMA). WCDMA may include communication protocols such as High-Speed Packet Access (HSPA) and/or Evolved HSPA (HSPA+). HSPA may include High-Speed Downlink Packet Access (HSDPA) and/or High-Speed Uplink Packet Access (HSUPA).

The base station 114a in the RAN 103/104/105 and the WTRUs 102a, 102b, 102c, and 102g, or RRHs 118a and 118b, TRPs 119a and 119b, and/or RSUs 120a and 120b in the RAN 103b/104b/105b and the WTRUs 102c, 102d, may implement a radio technology such as Evolved UMTS Terrestrial Radio Access (E-UTRA), which may establish the air interface 115/116/117 or 115c/116c/117c respectively using Long Term Evolution (LTE) and/or LTE-Advanced (LTE-A), for example. The air interface 115/116/117 or 115c/116c/117c may implement 3GPP NR technology. The LTE and LTE-A technology may include LTE D2D and/or V2X technologies and interfaces (such as Sidelink communications, etc.) Similarly, the 3GPP NR technology may include NR V2X technologies and interfaces (such as Sidelink communications, etc.)

The base station 114a in the RAN 103/104/105 and the WTRUs 102a, 102b, 102c, and 102g or RRHs 118a and 118b, TRPs 119a and 119b, and/or RSUs 120a and 120b in the RAN 103b/104b/105b and the WTRUs 102c, 102d, 102e, and 102f may implement radio technologies such as IEEE 802.16 (e.g., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114c in Figure 1A may be a wireless router, Home Node B, Home eNode B, or access point, for example, and may utilize any suitable RAT for facilitating wireless connectivity in a localized area, such as a place of business, a home, a vehicle, a train, an aerial, a satellite, a manufactory, a campus, and the like. The base station 114c and the WTRUs 102, e.g., WTRU 102e, may implement a radio technology such as IEEE 802.11 to establish a Wireless Local Area Network (WLAN). Similarly, the base station 114c and the WTRUs 102, e.g., WTRU 102d, may implement a radio technology such as IEEE 802.15 to establish a wireless personal area network (WPAN). The base station 114c and the WTRUs 102, e.g., WRTU 102e, may utilize a cellular-based RAT (e.g., WCDMA, CDMA2000, GSM, LTE, LTE-A, NR, etc.) to establish a picocell or femtocell. As shown in Figure 1A, the base station 114c may have a direct connection to the Internet 110. Thus, the base station 114c may not be required to access the Internet 110 via the core network 106/107/109.

The RAN 103/104/105 and/or RAN 103b/104b/105b may be in communication with the core network 106/107/109, which may be any type of network configured to provide voice, data, messaging, authorization and authentication, applications, and/or Voice Over Internet Protocol (VoIP) services to one or more of the WTRUs 102. For example, the core network 106/107/109 may provide call control, billing services, mobile location-based services, pre-paid calling, Internet connectivity, packet data network connectivity, Ethernet connectivity, video distribution, etc., and/or perform high-level security functions, such as user authentication.

Although not shown in Figure 1A, it will be appreciated that the RAN 103/104/105 and/or RAN 103b/104b/105b and/or the core network 106/107/109 may be in direct or indirect communication with other RANs that employ the same RAT as the RAN 103/104/105 and/or RAN 103b/104b/105b or a different RAT. For example, in addition to being connected to the RAN 103/104/105 and/or RAN 103b/104b/105b, which may be utilizing an E-UTRA radio technology, the core network 106/107/109 may also be in communication with another RAN (not shown) employing a GSM or NR radio technology.

The core network 106/107/109 may also serve as a gateway for the WTRUs 102 to access the PSTN 108, the Internet 110, and/or other networks 112. The PSTN 108 may include circuit-switched telephone networks that provide Plain Old Telephone Service (POTS). The Internet 110 may include a global system of interconnected computer networks and devices that use common communication protocols, such as the Transmission Control Protocol (TCP), User Datagram Protocol (UDP), and the internet protocol (IP) in the TCP/IP internet protocol suite. The other networks 112 may include wired or wireless communications networks owned and/or operated by other service providers. For example, the networks 112 may include any type of packet data network (e.g., an IEEE 802.3 Ethernet network) or another core network connected to one or more RANs, which may employ the same RAT as the RAN 103/104/105 and/or RAN 103b/104b/105b or a different RAT.

Some or all of the WTRUs 102a, 102b, 102c, 102d, 102e, and 102f in the communications system 100 may include multi-mode capabilities, e.g., the WTRUs 102a, 102b, 102c, 102d, 102e, and 102f may include multiple transceivers for communicating with different wireless networks over different wireless links. For example, the WTRU 102g shown in Figure 1A may be configured to communicate with the base station 114a, which may employ a cellular-based radio technology, and with the base station 114c, which may employ an IEEE 802 radio technology.

Although not shown in Figure 1A, it will be appreciated that a User Equipment may make a wired connection to a gateway. The gateway maybe a Residential Gateway (RG). The RG may provide connectivity to a Core Network 106/107/109. It will be appreciated that many of the ideas contained herein may equally apply to UEs that are WTRUs and UEs that use a wired connection to connect to a network. For example, the ideas that apply to the wireless interfaces 115, 116, 117 and 115c/116c/117c may equally apply to a wired connection.

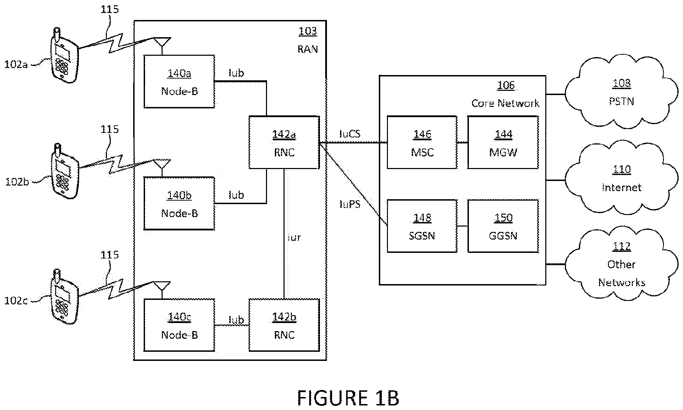

Figure 1B is a system diagram of an example RAN 103 and core network 106. As noted above, the RAN 103 may employ a UTRA radio technology to communicate with the WTRUs 102a, 102b, and 102c over the air interface 115. The RAN 103 may also be in communication with the core network 106. As shown in Figure 1B, the RAN 103 may include Node-Bs 140a, 140b, and 140c, which may each include one or more transceivers for communicating with the WTRUs 102a, 102b, and 102c over the air interface 115. The Node-Bs 140a, 140b, and 140c may each be associated with a particular cell (not shown) within the RAN 103. The RAN 103 may also include RNCs 142a, 142b. It will be appreciated that the RAN 103 may include any number of Node-Bs and Radio Network Controllers (RNCs.)

As shown in Figure 1B, the Node-Bs 140a, 140b may be in communication with the RNC 142a. Additionally, the Node-B 140c may be in communication with the RNC 142b. The Node-Bs 140a, 140b, and 140c may communicate with the respective RNCs 142a and 142b via an Iub interface. The RNCs 142a and 142b may be in communication with one another via an Iur interface. Each of the RNCs 142aand 142b may be configured to control the respective Node-Bs 140a, 140b, and 140c to which it is connected. In addition, each of the RNCs 142aand 142b may be configured to carry out or support other functionality, such as outer loop power control, load control, admission control, packet scheduling, handover control, macro-diversity, security functions, data encryption, and the like.

The core network 106 shown in Figure 1B may include a media gateway (MGW) 144, a Mobile Switching Center (MSC) 146, a Serving GPRS Support Node (SGSN) 148, and/or a Gateway GPRS Support Node (GGSN) 150. While each of the foregoing elements are depicted as part of the core network 106, it will be appreciated that any one of these elements may be owned and/or operated by an entity other than the core network operator.

The RNC 142a in the RAN 103 may be connected to the MSC 146 in the core network 106 via an IuCS interface. The MSC 146 may be connected to the MGW 144. The MSC 146 and the MGW 144 may provide the WTRUs 102a, 102b, and 102c with access to circuit-switched networks, such as the PSTN 108, to facilitate communications between the WTRUs 102a, 102b, and 102c, and traditional land-line communications devices.

The RNC 142a in the RAN 103 may also be connected to the SGSN 148 in the core network 106 via an IuPS interface. The SGSN 148 may be connected to the GGSN 150. The SGSN 148 and the GGSN 150 may provide the WTRUs 102a, 102b, and 102c with access to packet-switched networks, such as the Internet 110, to facilitate communications between and the WTRUs 102a, 102b, and 102c, and IP-enabled devices.

The core network 106 may also be connected to the other networks 112, which may include other wired or wireless networks that are owned and/or operated by other service providers.

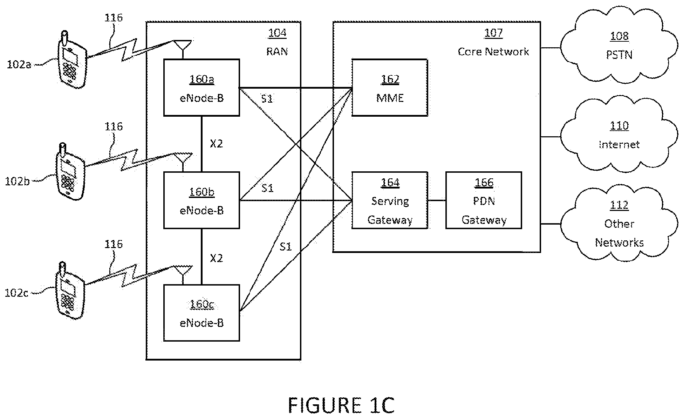

Figure 1C is a system diagram of an example RAN 104 and core network 107. As noted above, the RAN 104 may employ an E-UTRA radio technology to communicate with the WTRUs 102a, 102b, and 102c over the air interface 116. The RAN 104 may also be in communication with the core network 107.

The RAN 104 may include eNode-Bs 160a, 160b, and 160c, though it will be appreciated that the RAN 104 may include any number of eNode-Bs. The eNode-Bs 160a, 160b, and 160c may each include one or more transceivers for communicating with the WTRUs 102a, 102b, and 102c over the air interface 116. For example, the eNode-Bs 160a, 160b, and 160c may implement MIMO technology. Thus, the eNode-B 160a, for example, may use multiple antennas to transmit wireless signals to, and receive wireless signals from, the WTRU 102a.

Each of the eNode-Bs 160a, 160b, and 160c may be associated with a particular cell (not shown) and may be configured to handle radio resource management decisions, handover decisions, scheduling of users in the uplink and/or downlink, and the like. As shown in Figure 1C, the eNode-Bs 160a, 160b, and 160c may communicate with one another over an X2 interface.

The core network 107 shown in Figure 1C may include a Mobility Management Gateway (MME) 162, a serving gateway 164, and a Packet Data Network (PDN) gateway 166. While each of the foregoing elements are depicted as part of the core network 107, it will be appreciated that any one of these elements may be owned and/or operated by an entity other than the core network operator.

The MME 162 may be connected to each of the eNode-Bs 160a, 160b, and 160c in the RAN 104 via an S1 interface and may serve as a control node. For example, the MME 162 may be responsible for authenticating users of the WTRUs 102a, 102b, and 102c, bearer activation/deactivation, selecting a particular serving gateway during an initial attach of the WTRUs 102a, 102b, and 102c, and the like. The MME 162 may also provide a control plane function for switching between the RAN 104 and other RANs (not shown) that employ other radio technologies, such as GSM or WCDMA.

The serving gateway 164 may be connected to each of the eNode-Bs 160a, 160b, and 160c in the RAN 104 via the S1 interface. The serving gateway 164 may generally route and forward user data packets to/from the WTRUs 102a, 102b, and 102c. The serving gateway 164 may also perform other functions, such as anchoring user planes during inter-eNode B handovers, triggering paging when downlink data is available for the WTRUs 102a, 102b, and 102c, managing and storing contexts of the WTRUs 102a, 102b, and 102c, and the like.

The serving gateway 164 may also be connected to the PDN gateway 166, which may provide the WTRUs 102a, 102b, and 102c with access to packet-switched networks, such as the Internet 110, to facilitate communications between the WTRUs 102a, 102b, 102c, and IP-enabled devices.

The core network 107 may facilitate communications with other networks. For example, the core network 107 may provide the WTRUs 102a, 102b, and 102c with access to circuit-switched networks, such as the PSTN 108, to facilitate communications between the WTRUs 102a, 102b, and 102c and traditional land-line communications devices. For example, the core network 107 may include, or may communicate with, an IP gateway (e.g., an IP Multimedia Subsystem (IMS) server) that serves as an interface between the core network 107 and the PSTN 108. In addition, the core network 107 may provide the WTRUs 102a, 102b, and 102c with access to the networks 112, which may include other wired or wireless networks that are owned and/or operated by other service providers.

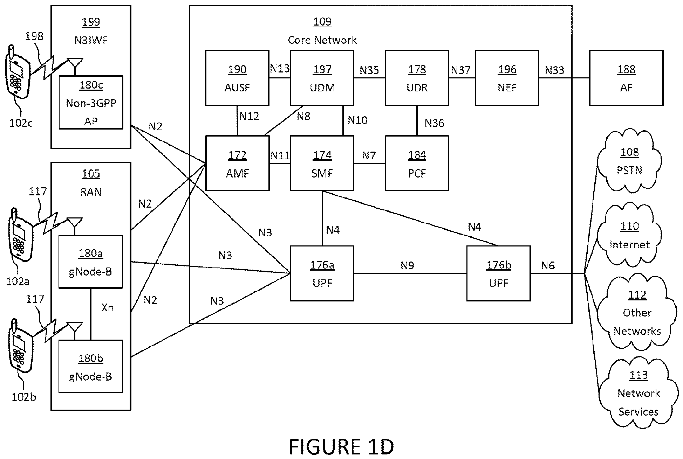

Figure 1D is a system diagram of an example RAN 105 and core network 109. The RAN 105 may employ an NR radio technology to communicate with the WTRUs 102a and 102b over the air interface 117. The RAN 105 may also be in communication with the core network 109. A Non-3GPP Interworking Function (N3IWF) 199 may employ a non-3GPP radio technology to communicate with the WTRU 102c over the air interface 198. The N3IWF 199 may also be in communication with the core network 109.

The RAN 105 may include gNode-Bs 180a and 180b. It will be appreciated that the RAN 105 may include any number of gNode-Bs. The gNode-Bs 180a and 180b may each include one or more transceivers for communicating with the WTRUs 102a and 102b over the air interface 117. When integrated access and backhaul connection are used, the same air interface may be used between the WTRUs and gNode-Bs, which may be the core network 109 via one or multiple gNBs. The gNode-Bs 180a and 180b may implement MIMO, MU-MIMO, and/or digital beamforming technology. Thus, the gNode-B 180a, for example, may use multiple antennas to transmit wireless signals to, and receive wireless signals from, the WTRU 102a. It should be appreciated that the RAN 105 may employ of other types of base stations such as an eNode-B. It will also be appreciated the RAN 105 may employ more than one type of base station. For example, the RAN may employ eNode-Bs and gNode-Bs.

The N3IWF 199 may include a non-3GPP Access Point 180c. It will be appreciated that the N3IWF 199 may include any number of non-3GPP Access Points. The non-3GPP Access Point 180c may include one or more transceivers for communicating with the WTRUs 102c over the air interface 198. The non-3GPP Access Point 180c may use the 802.11 protocol to communicate with the WTRU 102c over the air interface 198.

Each of the gNode-Bs 180a and 180b may be associated with a particular cell (not shown) and may be configured to handle radio resource management decisions, handover decisions, scheduling of users in the uplink and/or downlink, and the like. As shown in Figure 1D, the gNode-Bs 180a and 180b may communicate with one another over an Xn interface, for example.

The core network 109 shown in Figure 1D may be a 5G core network (5GC). The core network 109 may offer numerous communication services to customers who are interconnected by the radio access network. The core network 109 comprises a number of entities that perform the functionality of the core network. As used herein, the term "core network entity" or "network function" refers to any entity that performs one or more functionalities of a core network. It is understood that such core network entities may be logical entities that are implemented in the form of computer-executable instructions (software) stored in a memory of, and executing on a processor of, an apparatus configured for wireless and/or network communications or a computer system, such as system 90 illustrated in Figure x1G.

In the example of Figure 1D, the 5G Core Network 109 may include an access and mobility management function (AMF) 172, a Session Management Function (SMF) 174, User Plane Functions (UPFs) 176a and 176b, a User Data Management Function (UDM) 197, an Authentication Server Function (AUSF) 190, a Network Exposure Function (NEF) 196, a Policy Control Function (PCF) 184, a Non-3GPP Interworking Function (N3IWF) 199, a User Data Repository (UDR) 178. While each of the foregoing elements are depicted as part of the 5G core network 109, it will be appreciated that any one of these elements may be owned and/or operated by an entity other than the core network operator. It will also be appreciated that a 5G core network may not consist of all of these elements, may consist of additional elements, and may consist of multiple instances of each of these elements. Figure 1D shows that network functions directly connect to one another, however, it should be appreciated that they may communicate via routing agents such as a diameter routing agent or message buses.

In the example of Figure 1D, connectivity between network functions is achieved via a set of interfaces, or reference points. It will be appreciated that network functions could be modeled, described, or implemented as a set of services that are invoked, or called, by other network functions or services. Invocation of a Network Function service may be achieved via a direct connection between network functions, an exchange of messaging on a message bus, calling a software function, etc.

The AMF 172 may be connected to the RAN 105 via an N2 interface and may serve as a control node. For example, the AMF 172 may be responsible for registration management, connection management, reachability management, access authentication, access authorization. The AMF may be responsible forwarding user plane tunnel configuration information to the RAN 105 via the N2 interface. The AMF 172 may receive the user plane tunnel configuration information from the SMF via an N11 interface. The AMF 172 may generally route and forward NAS packets to/from the WTRUs 102a, 102b, and 102c via an N1 interface. The N1 interface is not shown in Figure 1D.

The SMF 174 may be connected to the AMF 172 via an N11 interface. Similarly the SMF may be connected to the PCF 184 via an N7 interface, and to the UPFs 176a and 176b via an N4 interface. The SMF 174 may serve as a control node. For example, the SMF 174 may be responsible for Session Management, IP address allocation for the WTRUs 102a, 102b, and 102c, management and configuration of traffic steering rules in the UPF 176a and UPF 176b, and generation of downlink data notifications to the AMF 172.

The UPF 176a and UPF176b may provide the WTRUs 102a, 102b, and 102c with access to a Packet Data Network (PDN), such as the Internet 110, to facilitate communications between the WTRUs 102a, 102b, and 102c and other devices. The UPF 176a and UPF 176b may also provide the WTRUs 102a, 102b, and 102c with access to other types of packet data networks. For example, Other Networks 112 may be Ethernet Networks or any type of network that exchanges packets of data. The UPF 176a and UPF 176b may receive traffic steering rules from the SMF 174 via the N4 interface. The UPF 176a and UPF 176b may provide access to a packet data network by connecting a packet data network with an N6 interface or by connecting to each other and to other UPFs via an N9 interface. In addition to providing access to packet data networks, the UPF 176 may be responsible packet routing and forwarding, policy rule enforcement, quality of service handling for user plane traffic, downlink packet buffering.

The AMF 172 may also be connected to the N3IWF 199, for example, via an N2 interface. The N3IWF facilitates a connection between the WTRU 102c and the 5G core network 170, for example, via radio interface technologies that are not defined by 3GPP. The AMF may interact with the N3IWF 199 in the same, or similar, manner that it interacts with the RAN 105.

The PCF 184 may be connected to the SMF 174 via an N7 interface, connected to the AMF 172 via an N15 interface, and to an Application Function (AF) 188 via an N5 interface. The N15 and N5 interfaces are not shown in Figure 1D. The PCF 184 may provide policy rules to control plane nodes such as the AMF 172 and SMF 174, allowing the control plane nodes to enforce these rules. The PCF 184, may send policies to the AMF 172 for the WTRUs 102a, 102b, and 102c so that the AMF may deliver the policies to the WTRUs 102a, 102b, and 102c via an N1 interface. Policies may then be enforced, or applied, at the WTRUs 102a, 102b, and 102c.

The UDR 178 may act as a repository for authentication credentials and subscription information. The UDR may connect to network functions, so that network function can add to, read from, and modify the data that is in the repository. For example, the UDR 178 may connect to the PCF 184 via an N36 interface. Similarly, the UDR 178 may connect to the NEF 196 via an N37 interface, and the UDR 178 may connect to the UDM 197 via an N35 interface.

The UDM 197 may serve as an interface between the UDR 178 and other network functions. The UDM 197 may authorize network functions to access of the UDR 178. For example, the UDM 197 may connect to the AMF 172 via an N8 interface, the UDM 197 may connect to the SMF 174 via an N10 interface. Similarly, the UDM 197 may connect to the AUSF 190 via an N13 interface. The UDR 178 and UDM 197 may be tightly integrated.

The AUSF 190 performs authentication related operations and connects to the UDM 178 via an N13 interface and to the AMF 172 via an N12 interface.

The NEF 196 exposes capabilities and services in the 5G core network 109 to Application Functions (AF) 188. Exposure may occur on the N33 API interface. The NEF may connect to an AF 188 via an N33 interface and it may connect to other network functions in order to expose the capabilities and services of the 5G core network 109.

Application Functions 188 may interact with network functions in the 5G Core Network 109. Interaction between the Application Functions 188 and network functions may be via a direct interface or may occur via the NEF 196. The Application Functions 188 may be considered part of the 5G Core Network 109 or may be external to the 5G Core Network 109 and deployed by enterprises that have a business relationship with the mobile network operator.

Network Slicing is a mechanism that could be used by mobile network operators to support one or more 'virtual' core networks behind the operator's air interface. This involves 'slicing' the core network into one or more virtual networks to support different RANs or different service types running across a single RAN. Network slicing enables the operator to create networks customized to provide optimized solutions for different market scenarios which demands diverse requirements, e.g., in the areas of functionality, performance and isolation.

3GPP has designed the 5G core network to support Network Slicing. Network Slicing is a good tool that network operators can use to support the diverse set of 5G use cases (e.g., massive IoT, critical communications, V2X, and enhanced mobile broadband) which demand very diverse and sometimes extreme requirements. Without the use of network slicing techniques, it is likely that the network architecture would not be flexible and scalable enough to efficiently support a wider range of use cases need when each use case has its own specific set of performance, scalability, and availability requirements. Furthermore, introduction of new network services should be made more efficient.

Referring again to Figure 1D, in a network slicing scenario, a WTRU 102a, 102b, or 102c may connect to an AMF 172, via an N1 interface. The AMF may be logically part of one or more slices. The AMF may coordinate the connection or communication of WTRU 102a, 102b, or 102c with one or more UPF 176a and 176b, SMF 174, and other network functions. Each of the UPFs 176a and 176b, SMF 174, and other network functions may be part of the same slice or different slices. When they are part of different slices, they may be isolated from each other in the sense that they may utilize different computing resources, security credentials, etc.

The core network 109 may facilitate communications with other networks. For example, the core network 109 may include, or may communicate with, an IP gateway, such as an IP Multimedia Subsystem (IMS) server, that serves as an interface between the 5G core network 109 and a PSTN 108. For example, the core network 109 may include, or communicate with a short message service (SMS) service center that facilities communication via the short message service. For example, the 5G core network 109 may facilitate the exchange of non-IP data packets between the WTRUs 102a, 102b, and 102c and servers or applications functions 188. In addition, the core network 170 may provide the WTRUs 102a, 102b, and 102c with access to the networks 112, which may include other wired or wireless networks that are owned and/or operated by other service providers.

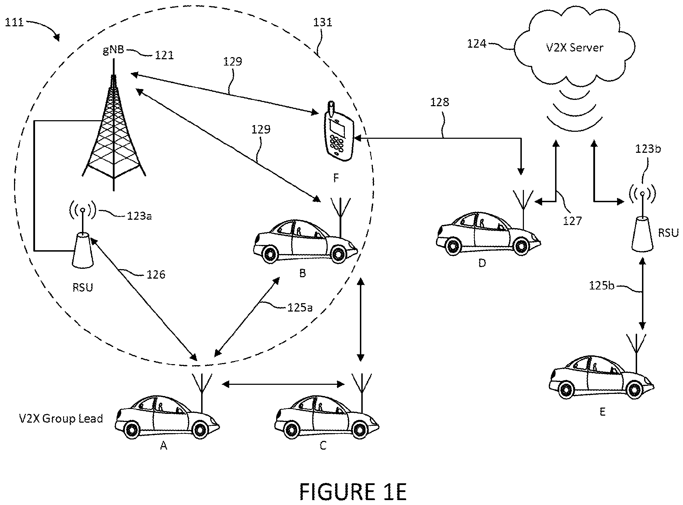

The core network entities described herein and illustrated in Figures 1A, 1C, 1D, and 1E are identified by the names given to those entities in certain existing 3GPP specifications, but it is understood that in the future those entities and functionalities may be identified by other names and certain entities or functions may be combined in future specifications published by 3GPP, including future 3GPP NR specifications. Thus, the particular network entities and functionalities described and illustrated in Figures 1A, 1B, 1C, 1D, and 1E are provided by way of example only, and it is understood that the subject matter disclosed and claimed herein may be embodied or implemented in any similar communication system, whether presently defined or defined in the future.

Figure 1E illustrates an example communications system 111 in which the systems, methods, apparatuses described herein may be used. Communications system 111 may include Wireless Transmit/Receive Units (WTRUs) A, B, C, D, E, F, a base station gNB 121, a V2X server 124, and Road Side Units (RSUs) 123a and 123b. In practice, the concepts presented herein may be applied to any number of WTRUs, base station gNBs, V2X networks, and/or other network elements. One or several or all WTRUs A, B, C, D, E, and F may be out of range of the access network coverage 131. WTRUs A, B, and C form a V2X group, among which WTRU A is the group lead and WTRUs B and C are group members.

WTRUs A, B, C, D, E, and F may communicate with each other over a Uu interface 129 via the gNB 121 if they are within the access network coverage 131. In the example of Figure 1E, WTRUs B and F are shown within access network coverage 131. WTRUs A, B, C, D, E, and F may communicate with each other directly via a Sidelink interface (e.g., PC5 or NR PC5) such as interface 125a, 125b, or 128, whether they are under the access network coverage 131 or out of the access network coverage 131. For instance, in the example of Figure 1E, WRTU D, which is outside of the access network coverage 131, communicates with WTRU F, which is inside the coverage 131.

WTRUs A, B, C, D, E, and F may communicate with RSU 123a or 123b via a Vehicle-to-Network (V2N) 133 or Sidelink interface 125b. WTRUs A, B, C, D, E, and F may communicate to a V2X Server 124 via a Vehicle-to-Infrastructure (V2I) interface 127. WTRUs A, B, C, D, E, and F may communicate to another UE via a Vehicle-to-Person (V2P) interface 128.

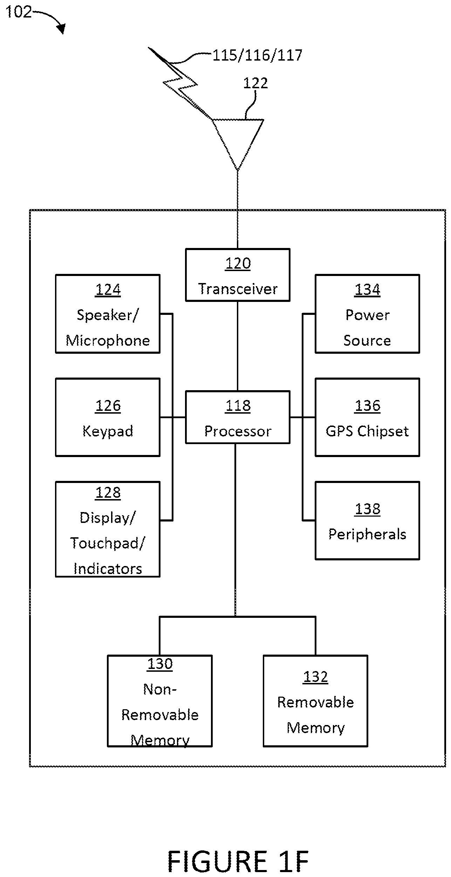

Figure 1F is a block diagram of an example apparatus or device WTRU 102 that may be configured for wireless communications and operations in accordance with the systems, methods, and apparatuses described herein, such as a WTRU 102 of Figure 1A, 1B, 1C, 1D, or 1E. As shown in Figure 1F, the example WTRU 102 may include a processor 118, a transceiver 120, a transmit/receive element 122, a speaker/microphone 124, a keypad 126, a display/touchpad/indicators 128, non-removable memory 130, removable memory 132, a power source 134, a global positioning system (GPS) chipset 136, and other peripherals 138. It will be appreciated that the WTRU 102 may include any sub-combination of the foregoing elements. Also, the base stations 114a and 114b, and/or the nodes that base stations 114a and 114b may represent, such as but not limited to transceiver station (BTS), a Node-B, a site controller, an access point (AP), a home node-B, an evolved home node-B (eNodeB), a home evolved node-B (HeNB), a home evolved node-B gateway, a next generation node-B (gNode-B), and proxy nodes, among others, may include some or all of the elements depicted in Figure 1F and described herein.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While Figure 1F depicts the processor 118 and the transceiver 120 as separate components, it will be appreciated that the processor 118 and the transceiver 120 may be integrated together in an electronic package or chip.

The transmit/receive element 122 of a UE may be configured to transmit signals to, or receive signals from, a base station (e.g., the base station 114a of Figure 1A) over the air interface 115/116/117 or another UE over the air interface 115d/116d/117d. For example, the transmit/receive element 122 may be an antenna configured to transmit and/or receive RF signals. The transmit/receive element 122 may be an emitter/detector configured to transmit and/or receive IR, UV, or visible light signals, for example. The transmit/receive element 122 may be configured to transmit and receive both RF and light signals. It will be appreciated that the transmit/receive element 122 may be configured to transmit and/or receive any combination of wireless or wired signals.

In addition, although the transmit/receive element 122 is depicted in Figure 1F as a single element, the WTRU 102 may include any number of transmit/receive elements 122. More specifically, the WTRU 102 may employ MIMO technology. Thus, the WTRU 102 may include two or more transmit/receive elements 122 (e.g., multiple antennas) for transmitting and receiving wireless signals over the air interface 115/116/117.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, for example NR and IEEE 802.11 or NR and E-UTRA, or to communicate with the same RAT via multiple beams to different RRHs, TRPs, RSUs, or nodes.

The processor 118 of the WTRU 102 may be coupled to, and may receive user input data from, the speaker/microphone 124, the keypad 126, and/or the display/touchpad/indicators 128 (e.g., a liquid crystal display (LCD) display unit or organic light-emitting diode (OLED) display unit. The processor 118 may also output user data to the speaker/microphone 124, the keypad 126, and/or the display/touchpad/indicators 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. The processor 118 may access information from, and store data in, memory that is not physically located on the WTRU 102, such as on a server that is hosted in the cloud or in an edge computing platform or in a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries, solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 115/116/117 from a base station (e.g., base stations 114a, 114b) and/or determine its location based on the timing of the signals being received from two or more nearby base stations. It will be appreciated that the WTRU 102 may acquire location information by way of any suitable location-determination method.

The processor 118 may further be coupled to other peripherals 138, which may include one or more software and/or hardware modules that provide additional features, functionality, and/or wired or wireless connectivity. For example, the peripherals 138 may include various sensors such as an accelerometer, biometrics (e.g., finger print) sensors, an e-compass, a satellite transceiver, a digital camera (for photographs or video), a universal serial bus (USB) port or other interconnect interfaces, a vibration device, a television transceiver, a hands free headset, a Bluetooth^{®} module, a frequency modulated (FM) radio unit, a digital music player, a media player, a video game player module, an Internet browser, and the like.

The WTRU 102 may be included in other apparatuses or devices, such as a sensor, consumer electronics, a wearable device such as a smart watch or smart clothing, a medical or eHealth device, a robot, industrial equipment, a drone, a vehicle such as a car, truck, train, or an airplane. The WTRU 102 may connect to other components, modules, or systems of such apparatuses or devices via one or more interconnect interfaces, such as an interconnect interface that may comprise one of the peripherals 138.

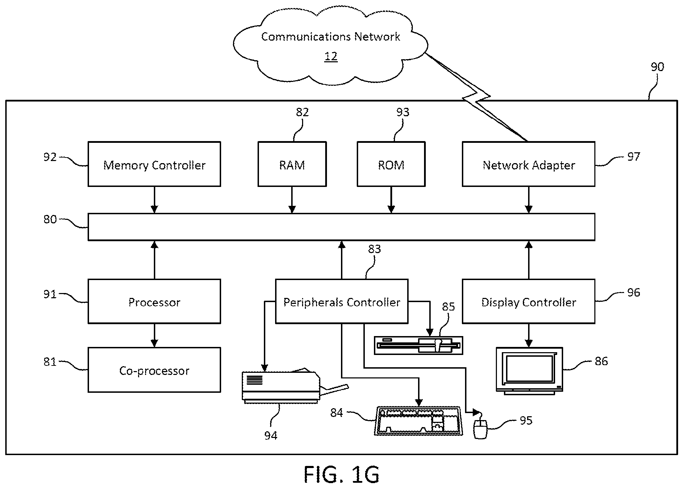

Figure 1G is a block diagram of an exemplary computing system 90 in which one or more apparatuses of the communications networks illustrated in Figures 1A, 1C, 1D and 1E may be embodied, such as certain nodes or functional entities in the RAN 103/104/105, Core Network 106/107/109, PSTN 108, Internet 110, Other Networks 112, or Network Services 113. Computing system 90 may comprise a computer or server and may be controlled primarily by computer readable instructions, which may be in the form of software, wherever, or by whatever means such software is stored or accessed. Such computer readable instructions may be executed within a processor 91, to cause computing system 90 to do work. The processor 91 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor 91 may perform signal coding, data processing, power control, input/output processing, and/or any other functionality that enables the computing system 90 to operate in a communications network. Coprocessor 81 is an optional processor, distinct from main processor 91, that may perform additional functions or assist processor 91. Processor 91 and/or coprocessor 81 may receive, generate, and process data related to the methods and apparatuses disclosed herein.

In operation, processor 91 fetches, decodes, and executes instructions, and transfers information to and from other resources via the computing system's main data-transfer path, system bus 80. Such a system bus connects the components in computing system 90 and defines the medium for data exchange. System bus 80 typically includes data lines for sending data, address lines for sending addresses, and control lines for sending interrupts and for operating the system bus. An example of such a system bus 80 is the PCI (Peripheral Component Interconnect) bus.

Memories coupled to system bus 80 include random access memory (RAM) 82 and read only memory (ROM) 93. Such memories include circuitry that allows information to be stored and retrieved. ROMs 93 generally contain stored data that cannot easily be modified. Data stored in RAM 82 may be read or changed by processor 91 or other hardware devices. Access to RAM 82 and/or ROM 93 may be controlled by memory controller 92. Memory controller 92 may provide an address translation function that translates virtual addresses into physical addresses as instructions are executed. Memory controller 92 may also provide a memory protection function that isolates processes within the system and isolates system processes from user processes. Thus, a program running in a first mode may access only memory mapped by its own process virtual address space; it cannot access memory within another process's virtual address space unless memory sharing between the processes has been set up.

In addition, computing system 90 may contain peripherals controller 83 responsible for communicating instructions from processor 91 to peripherals, such as printer 94, keyboard 84, mouse 95, and disk drive 85.

Display 86, which is controlled by display controller 96, is used to display visual output generated by computing system 90. Such visual output may include text, graphics, animated graphics, and video. The visual output may be provided in the form of a graphical user interface (GUI). Display 86 may be implemented with a CRT-based video display, an LCD-based flat-panel display, gas plasma-based flat-panel display, or a touch-panel. Display controller 96 includes electronic components required to generate a video signal that is sent to display 86.

Further, computing system 90 may contain communication circuitry, such as for example a wireless or wired network adapter 97, that may be used to connect computing system 90 to an external communications network or devices, such as the RAN 103/104/105, Core Network 106/107/109, PSTN 108, Internet 110, WTRUs 102, or Other Networks 112 of Figures 1A, 1B, 1C, 1D, and 1E, to enable the computing system 90 to communicate with other nodes or functional entities of those networks. The communication circuitry, alone or in combination with the processor 91, may be used to perform the transmitting and receiving steps of certain apparatuses, nodes, or functional entities described herein.

It is understood that any or all of the apparatuses, systems, methods and processes described herein may be embodied in the form of computer executable instructions (e.g., program code) stored on a computer-readable storage medium which instructions, when executed by a processor, such as processors 118 or 91, cause the processor to perform and/or implement the systems, methods and processes described herein. Specifically, any of the steps, operations, or functions described herein may be implemented in the form of such computer executable instructions, executing on the processor of an apparatus or computing system configured for wireless and/or wired network communications. Computer readable storage media includes volatile and nonvolatile, removable and non-removable media implemented in any non-transitory (e.g., tangible or physical) method or technology for storage of information, but such computer readable storage media do not include signals. Computer readable storage media include, but are not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other tangible or physical medium which may be used to store the desired information and which may be accessed by a computing system.

### Reduced Capability NR Devices

In 3GPP, RAN working groups are studying how to enhance the 5G system to better support reduced capability devices (see RP-201386). The study focuses on use cases where the UE is hosting IoT functionality. IoT devices usually provide relatively low-end services, have small device form factors, and/or are completely wireless with a battery life of several years. Some examples of the use cases include the following: (i) Industrial Wireless Sensor applications such as pressure sensors, humidity sensors, thermometers, motion sensors, accelerometers, actuators, etc.; (ii) Video surveillance; and (iii) Wearable devices such as smart watches, rings, eHealth related devices, and medical monitoring devices etc.

The RAN working groups will study reducing UE complexity by exploring how to enhance the 5G System to do the following: First, reduce the number of UE RX/TX antennas; Second, reduce UE Bandwidth; Third, support Half-Duplex-FDD; Fourth, relax UE processing time, and Fifth, relax the UE processing capabilities.

The study also aims to uncover ways to improve the UE's power savings ability and improve battery lifetime. For example, the study will explore how to relax RRM requirements for stationary devices. The study will also explore how to constrain such reduced capabilities, in other words the study will consider how to ensure reduced capability features are only used in the intended use cases and how the network can verify that only authorized devices are permitted to use reduced capability features. The results of the RAN study are being captured in TS 38.875.

Within SA2, it has been discussed the 5G Core Network should be aware of whether a UE is a reduced capability UE and the 5G Core Network should be aware of what reduced capabilities are supported by the UE so the 5G Core Network can control what services the UE is able to access, see S2-2100889.

### Expected UE Behavior and Core Network assisted RAN Parameter Tuning

As described in TS 23.501 and clause 4.15.6 of TS 23.502, an application function may configure Expected UE Behavior in a UE's subscription information. Expected UE Behavior is a set of parameters provisioned by an external party to 5G network functions on the foreseen or expected UE behavior. Expected UE behavior may include a Stationary Indication that identifies whether the UE is stationary or mobile. Expected UE behavior may also include an Expected UE Moving Trajectory and an Expected Time and Day of Week in Trajectory. The Expected UE Moving Trajectory identifies the UE's expected geographical movement. The Expected Time and Day of Week in Trajectory identifies the time and day of week when the UE is expected to be at each location included in the Expected UE Moving Trajectory.

As described in TS 23.501, Core Network assisted RAN parameters are parameters that are sent from the AMF to the RAN and are tuning aids that the RAN uses to minimize the UE state transitions and achieve optimum network behavior. The Core Network assisted RAN parameters include "Expected UE mobility" indicating whether the UE is expected to be stationary or mobile. This may be derived from the statistical information or Expected UE Behavior parameters or from subscription information. The Core Network assisted RAN parameters also include "Expected UE moving trajectory" which may be derived e.g., from the statistical information or Expected UE Behavior parameters or from subscription information.

Clause 4.15.6 of TS 23.502 also explains that Expected UE Behavior parameters may also include a Battery Indication. The Battery Indication indicates if the UE is battery powered with not rechargeable/not replaceable battery, battery powered with rechargeable/replaceable battery, or not battery powered.

### PDU Session Establishment and Modification

Per TS 23.501 and TS 23.502, The 5GC supports a PDU Connectivity Service i.e. a service that provides exchange of PDUs between a UE and a data network identified by a DNN. The PDU Connectivity Service is supported via PDU Sessions that are established upon request from the UE.

PDU Sessions are established (upon UE request), modified (upon UE and 5GC request) and released (upon UE and 5GC request) using NAS SM signaling exchanged over N1 between the UE and the SMF.

Whether the UE or 5GC requests that a PDU Session be modified, the PDU Session Modification procedure includes a PDU Session Modification Command that is sent from the SMF to the UE.

A PDU Session may be associated with an AMBR. UL and DL Session-AMBR is enforced by the UPF, if the UPF receives the Session-AMBR values from the SMF. The UE performs UL rate limitation on PDU Session basis for Non-GBR traffic using Session-AMBR, if the UE receives a Session-AMBR.

The 5G QoS model is based on QoS Flows. The 5G QoS model supports both QoS Flows that require guaranteed flow bit rate (GBR QoS Flows) and QoS Flows that do not require guaranteed flow bit rate (Non-GBR QoS Flows). The 5G QoS model also supports Reflective QoS.

### QoS

The QoS Flow is the finest granularity of QoS differentiation in the PDU Session. A QoS Flow ID (QFI) is used to identify a QoS Flow in the 5G System. User Plane traffic with the same QFI within a PDU Session receives the same traffic forwarding treatment (e.g., scheduling, admission threshold). The QFI is carried in an encapsulation header on N3 (and N9) i.e. without any changes to the e2e packet header. QFI shall be used for all PDU Session Types. The QFI shall be unique within a PDU Session. The QFI may be dynamically assigned or may be equal to the 5QI.

In the 5G System, the SMF provides Packet Detection Rules (PDR) to the UPF. The PDRs are associated with QoS Enforcement Rules (QER). When the UPF detects that a packet matches the PDR, then the QER will be applied.

A PDR can include an IP Packet Filter Set and if traffic matches the IP Filter, then some QER can be applied. However, the PDR can also include an Application ID. The Application ID is an index to a set of application detection rules configured in UPF. The application detection rule can be more granular than a simple IP filter.

Packet Flow Descriptions (PFD) can be sent to the SMF and the SMF can provide them to the UPF. A PFD contains application detection rules. As mentioned above, the rules can be more granular than a simple IP filter. The application descriptor can be a simple IP Filter or a URLs that need to be matched (or domain names, or protocol). The PFD will also have an Application ID.

When the SMF gets a PFD, it looks at the Application ID of the PFD and checks what PDRs it has that have the same Application ID. Then it checks what UPFs have the PDRs with the patching Application ID. Then it sends the PFD to all the UPFs that it identified.

Note that the SMF sends QoS Rules to the UE and sends QER to the UPF. They have similar names and carry similar information, but they are different. Note that there is no PFD - like functionality in the UE. In other words, the network can tell the UE to apply a certain QFI value to a certain IP Flow, but the network cannot tell the UE to apply a certain QFI value when it detects a particular URL name.

### MT, TE and AT Commands

A UE traditionally refers to a mobile phone, mobile computer, mobile broadband adaptor, connected vehicle, connected device, etc. that can connect to a cellular network. The UE has an MT (Mobile Termination) part which provides a cellular radio interface and a TE (Terminal Equipment) part that offers services to a user and does not typically provide features that are specific to the cellular radio interface part. For example, the TE might provide a control GUI.

The TE and MT parts of the UE may communicate via AT Commands. Some examples of AT Commands are defined in 3GPP TS 27.007.

A UE may also have a SIM that stores user credentials and network identities. It should be appreciated that the ideas in this paper equally apply to devices that do not have a SIM to store user credentials and network identities. Devices can instead store user credentials and network identities in other forms of non-volatile memory. Thus, all ideas in this paper that are described as applying to a UE, could equally apply to any device.

### Unified Access Control

TS 24.501 defines access control techniques for the 5G System. When the 5G NAS layer of a UE detects that it has mobile originated data or signaling to send, the UE NAS layer needs to perform the mapping of the kind of data or signaling to one or more access identities and one access category. The NAS Layer will perform access barring checks when receiving that request, based on the determined access identities and access category. The allowable Access Identity and Access Category Values are defined in TS 22.261.

Access Categories are numbered 0-63. Numbers 32-63 are reserved for operator use. Operators may use NAS signaling to configure definitions, or conditions that need to be met, for each of these categories in the UE. The definitions may be based on what Data Network Name (DNN) the access is associated with, what Single-Network Slice Selection Assistance Information (S-NSSAI) the access is associated with, etc.

The NG-RAN may broadcast barring control information associated with Access Categories and Access Identities as specified in TS 38.300.

One aspect of the present application describes how the 5G System may be enhanced to allow the network to identify REDCAP UEs, how the network may identify what REDCAP features are, or are not, supported by REDCAP UEs, how the system can be optimized for stationary REDCAP UEs, or UEs whose trajectory can be anticipated, and how network services can be adjusted for REDCAP UEs.

It should be noted with respect to any of the embodiment described herein, that the network may use its knowledge of the device being a REDCAP device, to adjust how it prioritizes the device for the services it provides to the device, and for example to inform the device that it should transition to a minimal user experience state.

### Identifying REDCAP UEs

A REDCAP UE may be a type of UE. In other words, it may be a UE that supports or does not support certain features such as a reduced number of UE RX/TX antennas, reduced bandwidth, Half-Duplex-FDD, relaxed UE processing time, and relaxed UE processing capabilities. REDCAP UEs maybe be divided into certain sub-classes or types (e.g., REDCAP class 1, REDCAP class 2, etc.) where UEs of each REDCAP class or type support or do not support a specific set of features (e.g., reduced number of UE RX/TX antennas, etc.).

A REDCAP UE may be a UE that is operating in a mode of operation. In other words, it may be a UE that supports, or does not support, certain features (e.g., relaxed UE processing time) only while operating in the REDCAP mode of operation. When the UE stops operating in the REDCAP mode of operation, it may again support, or stop supporting, certain features (e.g., UE processing time may no longer be reduced).

Regardless of whether REDCAP is an indication of device type or device operating mode, the UE should indicate to the network that it is a REDCAP UE and the network should authorize the UE for behaving as a REDCAP UE.

### Identifying the REDCAP LTE During Registration

According to an aspect of the application, when a UE performs a registration procedure with the network, it may include a REDCAP Indication in either RRC part of the request, NAS part of the request or both the RRC and NAS parts of the request. The REDCAP indication may be a single bit indication that indicates whether the UE desires to operate in REDCAP mode or not. Alternatively, the REDCAP indication maybe a series of indications that indicate each of the REDCAP features that the UE does, or does not, support.

The purpose of including the indication in the RRC part of the message is to indicate to the RAN Node that the UE is a REDCAP UE. This indication may be used by the RAN node to help in selecting an AMF for the UE. For example, the network maybe designed such that certain AMFs preferably serve REDCAP UEs.

One of the purposes of including the indication in the NAS part of message is to indicate to the network (i.e. AMF) that the UE desires to operate as a REDCAP UE. The AMF may check the UE's subscription information and verify that the UE is authorized to operate as a REDCAP UE. The indication may also help AMF select a network slice for the UE if there are some network slices deployed by the operator that are dedicated for the REDCAP UE. The AMF may send a NAS reply to the NAS registration request and indicate to the UE if the UE is permitted to operate as a REDCAP UE. If the AMF determines the UE is not authorized to operate as a REDCAP UE, the AMF may indicate to the UE that it is not authorized. The indication that the UE is not authorized may be sent to the UE in a rejection cause code. The rejection cause code may indicate if the request to operate in REDCAP mode was rejected due to the UE not being authorized to operate in REDCAP mode (i.e. based on the UE's subscription) or if the rejection was because the network does not support the requested REDCAP mode behavior. The advantage of indicating to the UE that the UE may be authorized but the network does not support the requested REDCAP mode behavior is that the UE would know that it may attempt to request to operate in REDCAP mode in a different part of the network (e.g., in a different RA). Whereas, if the network indicates that the UE is not authorized to operate in REDCAP mode, then the UE may be prohibited from requesting to operate in REDCAP mode while it is registered.

The AMF will also indicate to the RAN node, that the UE is operating as a REDCAP UE so that the RAN node is aware that the UE is permitted to behave as a

### REDCAP UE.

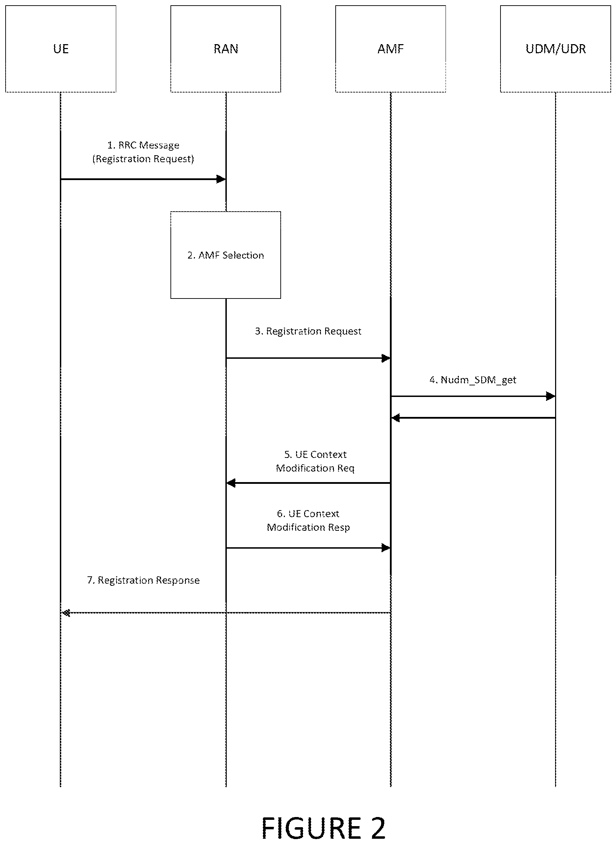

This procedure is illustrated in Figure 2. Each step in Figure 2 is denoted by an Arabic numeral. In an exemplary embodiment, the steps of Figure 2 are recited as follows:

In step 1, the UE sends an RRC Message to the RAN Node. The RRC Message includes a NAS Registration request. As described earlier, both the RRC part and NAS part of the message include the REDCAP indication. Alternatively, only the RRC part of the message or only the NAS part of the message includes the REDCAP indication. The REDCAP indication may be a single bit indication that indicates whether the UE desires to operate in REDCAP mode or not. Alternatively, the REDCAP indication maybe a series of indications that indicate each of the REDCAP features that the UE does, or does not, support.

In step 2, the RAN node uses the REDCAP Indication that is in the RRC part of the message if included to help perform AMF selection. The RAN node will use the REDCAP indication as an indication that an AMF can serve REDCAP UEs should be selected.

In step 3, the NAS Registration Request will be forwarded to the AMF by the selected RAN node. As described earlier, the NAS Registration Request includes the REDCAP Indication.

In step 4, the AMF invokes the Nudm_SDM_get service with the UDM to obtain the UE's subscription information from the UDR. Alternatively, the AMF may have obtained the UE's context information from another AMF (i.e. an AMF that was previously serving the UE) or from a UDSF. After obtaining the UE's subscription information, the AMF will determine if the UE is permitted to behave as a REDCAP UE as indicated by the REDCAP Indication.

In step 5, when the UE is permitted to behave as a REDCAP UE, the AMF will inform the RAN node by sending a UE CONTEXT MODIFICATION REQUEST. The UE CONTEXT MODIFICATION procedure is described in TS 38.413. The UE CONTEXT MODIFICATION REQUEST may include the REDCAP indication. If the AMF is not REDCAP capable or cannot provide the REDCAP feature request by the UE, the AMF may inform RAN node that it is not REDCAP capable or cannot provide the REDCAP feature requested by the UE. In this case, the AMF may send the REROUTE NAS REQUEST message to the RAN node, to request the RAN node to reroute the UE NAS message for e.g., the INITIAL UE MESSAGE to an AMF that is REDCAP capable or which can provide the REDCAP feature requested by the UE. The UE Context modification request message may also include a REDCAP indication to inform the RAN node that the UE is REDCAP UE. This might be the case if only the NAS part of the UE message carries the REDCAP indication. Additionally, the UE Context modification request message may also include whether the UE is allowed to operate as a REDCAP UE and what REDCAP features/service are available to the UE.

In step 6, the RAN node will reply to the UE CONTEXT MODIFICATION REQUEST. The UE Context modification response message may also include a REDCAP indication to inform the RAN node that the UE is REDCAP UE. This might be the case if the NAS part of the UE message carries the REDCAP indication. Additionally, the As described above, the RAN node will use the indication to determine if the UE is allowed to behave as a REDCAP UE, determine what features the UE does support and determine what features the UE does not support.

In step 7, the AMF returns a response to the registration request and may include whether the UE is allowed to operate as a REDCAP UE and what REDCAP features/service are available to the UE. If the network (e.g., RAN node, AMF, etc.) in this RA does not support REDCAP capability, the AMF returns an appropriate indication that the network (in this RA) does not support REDCAP capability so the UE may request for REDCAP capability in another RA.

### Registration Considerations for REDCAP LTEs

According to another aspect of the application, in the Registration Accept message or UE Configuration Update message, the network may indicate to the UE which slices in the Configured NSSAI may be used by the UE when the UE is operating as a REDCAP UE. This may be desirable in scenarios where the network operator desires that REDCAP UE's only use certain slice(s). Alternatively, the network may use the Registration Accept message or UE Configuration Update message to provide the UE with two Configured NSSAI's; one Configured NSSAI that is to be used when operating in REDCAP mode and a second Configured NSSAI that is to be used when not operating in REDCAP mode.

In alternative embodiment of this aspect, a REDCAP UE may be slice unaware and may provide no Requested NSSAI when registering with the network. The network may select a slice for the UE based on the UE's default NSSAI in the UE's subscription in the UDM/UDR and the network may choose to send no Allowed NSSAI to the UE. In this scenario, the UE may interpret the Registration Accept message from the network as an indication that the network has selected a default S-NSSAI to serve the UE and the S-NSSAI name will not be sent to the UE. The advantage of this approach is that the network can direct all of the UE's traffic to a single slice and the UE requires no logic to determine which slice should be used for a given piece of application traffic. Instead of providing no Allowed NSSAI to the UE, the network may instead provide an Allowed NSSAI information element with no SD or SST field or an empty SD or SST field. This may serve as an indication to the UE that an S-NSSAI was allowed but the name will not be provided to the UE. The advantage of providing an Allowed NSSAI with no SD or SST value to the UE is that the presence of the Allowed NSSAI IE can serve as an indication that some slice was allowed. Similarly, if no slice was allowed, but a slice is pending secondary slice specific authorization, the network may send the UE a pending NSSAI with no SD or SST value.

### Considerations for REDCAP Operation Mode

In yet another alternative embodiment to implementing REDCAP as a UE type, this feature may be implemented as a mode or as a combination of UE capability (or type, as described previously) and an operating mode. In this alternative, the UE may switch in and out of the REDCAP mode(s) of operation.

For example in this particular embodiment, the UE may use a Registration Update (e.g. a mobility registration update) to request switching in and out of the REDCAP mode(s) of operation. In other words, a UE that is already registered to the network may use a Registration Request to switch in and out of the REDCAP mode of operation. Since the UE is changing what capabilities, or network features, it will utilize, it may be desirable for the UE to transition to the CM-IDLE state before sending the Registration Request that indicates that the UE is switching in and out of the REDCAP mode of operation. Alternatively, the UE may not transition to the CM-IDLE, but rather, the UE performs a registration update to request to switch in and out of the REDCAP mode(s) of operation, while in CM-CONNECTED.

If REDCAP is a mode of operation, and not a fixed UE type, then Application Layer events at the UE may trigger the UE's request to switch in and out of the REDCAP mode of operation. For example, a video streaming application on the UE may determine to stop or start streaming high quality video. Thus, the MT part of the UE may expose AT Commands to the TE part of the UE so that Applications that are hosted on the TE may invoke an AT Command that will trigger the UE to switch in and out of the REDCAP mode. Furthermore, when the UE switches in and out of the REDCAP mode of operation, the MT part of UE may use an AT Command to notify applications that are hosted on the TE that the UE is, or is not, operating in REDCAP mode. Applications on the TE may use this information to adjust their application layer behavior (e.g., start or stop transmitting high quality video).

In addition, the REDCAP mode of operation may be also determined based on signaling from the network. 5GC events may trigger indications to the UE that switching in or out of the REDCAP mode of operation is recommended due to network conditions. This indication may be used by the MT part of the UE to trigger switching in/out of the REDCAP mode, as described previously.

A UE may also send a REDCAP indication to the SMF during PDU Session establishment. The indication may be used by the SMF to determine that the UE is operating in REDCAP mode or that the PDU Session should be considered to be in REDCAP mode and that the UE should be provide with REDCAP QoS Rules and a REDCAP AMBR.

### Obtaining Additional Information about LTEs Support of REDCAP Behavior

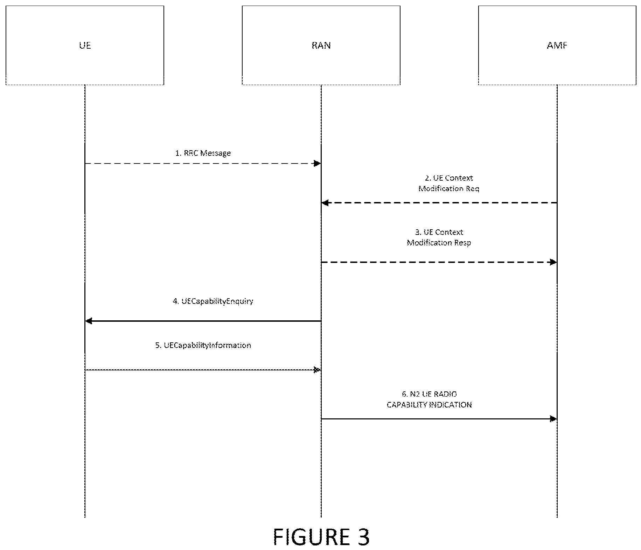

According to even another aspect of the application, when the RAN node receives an indication from the UE that the UE wishes to operate as a REDCAP UE or when the RAN node receives an indication from the AMF that the UE is authorized to operate as a REDCAP UE, the RAN Node may be triggered to request the UE's REDCAP capabilities. Once the RAN Node obtains the UE's REDCAP capabilities, the RAN node may provide some, or all, of the capability information to the AMF. This procedure is illustrated in Figure 3. The steps of Figure 3 are recited as Arabic numerals as follows:

In Step 1, the UE sends an RRC Message to the RAN node indicating that the UE desires to behave as a REDCAP UE.

In step 2, the AMF sends an N2 message to the RAN node to indicate that the UE desires to behave as a REDCAP UE. This message may further indicate if the UE is authorized to behave as a REDCAP UE. The message may further indicate to the RAN node that the AMF requests that the RAN node obtain the UE's REDCAP capabilities. The AMF may have been triggered to send this message to the RAN when it received a NAS message from the UE that indicated that the UE desires to behave as a REDCAP UE. For example, the AMF may be triggered to send this message when the AMF received the Registration message that was described earlier. The AMF may also be triggered to send this message when it receives an indication from the UDM/UDR that the UE should behave as a REDCAP UE. Alternatively, the AMF may initiate this request when it receives a request from the RAN node indicating that it UE desires to behave as a REDCAP UE.

In step 3, the RAN node acknowledges the AMF's request.

In step 4, the RAN node sends a UECapabilityEnquiry message to the UE. This message may be triggered when the RAN node receives the message of step 1 or 2. This message is defined in TS 38.331 and may include a REDCAP indication to indicate that the RAN node would like to obtain information about the UE's REDCAP capabilities.

In step 5, the UE provides information about the UE's REDCAP capabilities to the RAN node. As describes earlier this information may include information about the UE's ability to support certain features such as a reduced number of UE RX/TX antennas, reduced supported bandwidth, support for Half-Duplex-FDD, relaxed UE processing time, and relaxed UE processing capabilities.

In step 6, the RAN node provides information about the UE's REDCAP capabilities to the AMF. The RAN node may provide only a subset of the information that was received in step 5. For example, the RAN node may not provide information about the UE's number of RX/TX antennas as this information might not be useful to the AMF. This information may be sent to the AMF in an N2 UE RADIO CAPABILITY INFO INDICATION message. The N2 UE RADIO CAPABILITY INFO INDICATION message is described in TS 38.413.

One of the many advantages of only providing a REDCAP capability during registration and providing additional details about the UE's REDCAP capabilities when requested is that the UE can provide the indication in all registration requests and only provide the details when requested by the network. The network would only need to request details when the details are not stored in the UE's context in the RAN, AMF or UDM.

### Optimizations for Stationary UEs

According to a yet even a further aspect of the application, when a UE is stationary, requirements to perform RRM may be reduced for REDCAP UEs. Decisions about what RRM is needed and when RRM is needed, is ultimately controlled by the RAN part of the network. However, the RAN part of the network is not necessarily aware of whether a UE can be considered stationary. As described earlier in this paper, the core network may provide the RAN node with the UE's Stationary Indication, Expected UE Moving Trajectory, and/or Expected Time and Day of Week in Trajectory. It should be understood herein that the indication by the core network to the RAN that a UE is stationary, may also be in the form of 'Index to RAT/Frequency Selection Priority' (RFSP Index). Special values of RFSP may be used to indicate that a UE is stationary or quasi-stationary.

It is proposed that the RAN node uses the UE's REDCAP capability indication and UE's Stationary Indication, Expected UE Moving Trajectory, and/or Expected Time and Day of Week in Trajectory to determine when and whether to reduce the UE's RRM requirements.

As described earlier, the core network determines UE's Stationary Indication, Expected UE Moving Trajectory, and/or Expected Time and Day of Week in Trajectory based on subscription information that is provisioned in the UDM/UDR by an Application Server. In some scenarios, a UE might not be associated with an application server that is aware of whether or not the UE is stationary and is not aware of the UE's trajectory. Thus, it is proposed that the UE indicate to the network whether it can be assumed to be stationary, the UE's expected trajectory, and expected time and day of week in trajectory.

### Trajectory Information in RRC Messaging

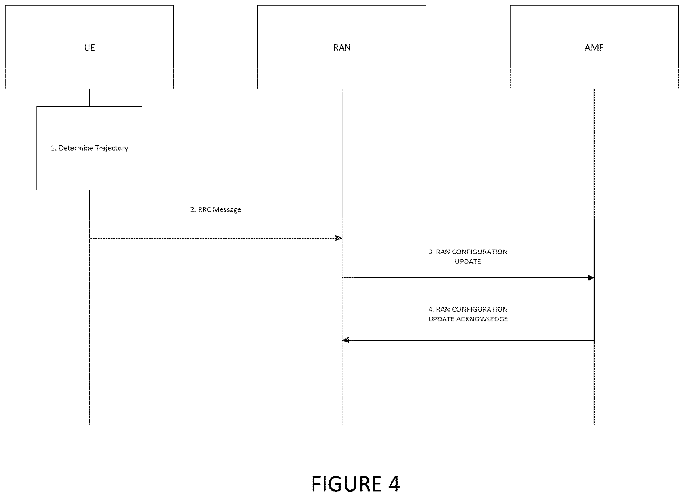

According to even a further aspect of the application, the UE may indicate its trajectory to the network in an RRC message. An example procedure for how the UE may indicate its trajectory to the network in an RRC message is shown in Figure 4. Each of the steps of Figure 4 is recited as an Arabic numeral as follows:

In step 1, the UE determines its trajectory or that it is stationary. The UE may determine the trajectory, or that it is stationary, when an Application that is hosted on the TE part of the UE invokes an AT Command and the AT Command provides the trajectory, or stationary indication, to the MT part of the UE.

In step 2, the UE sends an RRC Message to the RAN node. The message includes the trajectory information and/or stationary indication.

In step 3, the RAN node provides the trajectory information, or stationary indication, to the AMF. The information, or stationary indication, may be sent to the AMF in a RAN CONFIGURATION UPDATE message.

In step 4, the AMF may acknowledge the message in a RAN CONFIGURATION UPDATE ACKNOWLEDGE message.

### Trajectory Information in NAS Messaging

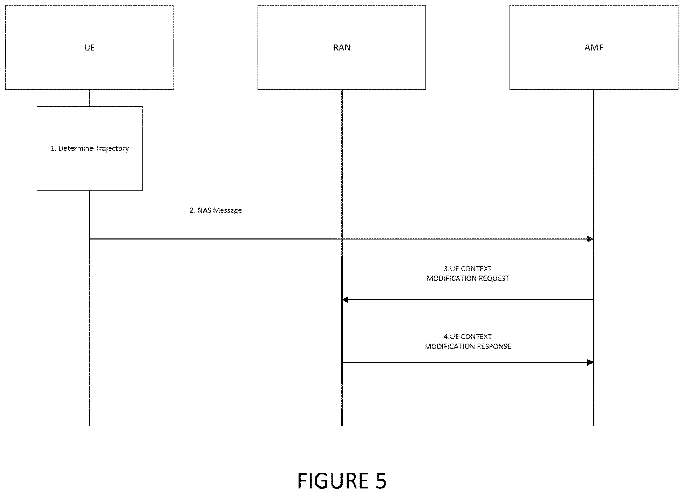

According to yet even a further aspect of the application, the UE may indicate its trajectory to the network in an NAS message. An example procedure for how the UE may indicate its trajectory to the network in an NAS message is shown in Figure 5 as follows:

In step 1, the UE determines its trajectory or that it is stationary. The UE may determine the trajectory, or that it is stationary, when an Application that is hosted on the TE part of the UE invokes an AT Command and the AT Command provides the trajectory, or stationary indication, to the MT part of the UE.

In step 2, the UE sends a NAS Message to the AMF node in the core network. The message includes the trajectory information and/or stationary indication.

In step 3, the AMF node provides the trajectory information, or stationary indication, to the RAN node. The information, or stationary indication, may be sent to the RAN Node in a UE CONTEXT MODIFICATION REQUEST message.

In step 4, the RAN Node may acknowledge the message in a UE CONTEXT MODIFICATION RESPONSE message.

### Notifying the UE of Reduced RRM Requirements

According to subsequent aspect of the application, when the RAN node receives a notification that the UE is stationary or has a relatively small trajectory, the RAN node may reconfigure the UE's RRM (i.e. reduce the UE's RRM requirements). When the RAN node informs the UE that the UE's RRM requirements have been reduced, the MT may send a notification about the reduced RRM requirements to an application that is hosted in the TE part of the UE and information about the reduced RRM requirements may be displayed on a UE. The notification from the network to the MT part of the UE may indicate that he RRM requirements are being reduced because the UE is a REDCAP UE.

### Notifying the LTE of Trajectory Expectations

According to yet a further aspect of the application, when the RAN node notifies the UE of the expected trajectory (i.e. notifies the UE of the expected trajectory as indicated to the network by an AF), the MT part of the UE may send the expected trajectory information to the TE part of the UE and the information may be displayed on a graphical user interface. The notification from the network to the MT part of the UE is for REDCAP purposes. As described above, the trajectory information may indicate that the UE is expected to be stationary. The notification from the network to the MT part of the UE may indicate that he RRM requirements are being reduced because the UE is a REDCAP UE. Thus, the GUI may display an image indicating to the UE that the network is not providing mobility management services to the UE and that the UE should remain stationary.

The MT part of the UE may further expose an AT command to applications that are hosted in the TE part of the UE that allows the applications to indicate to the MT that the UE's trajectory needs to change (e.g. the UE can no longer be considered stationary or the UE can now be considered stationary) and the MT may send an RRC or NAS message to the network to inform the network that the UE's trajectory has changed. The network may use this information to determine whether stationary related optimizations may apply.

### Optimizations for Power Constrained UEs.

According to even a further aspect of the application, when a UE is power constrained, optimizations may be made for REDCAP UEs. For example, a REDCAP UE's requirements to perform RRM may be reduced, PDCCH BD parameters may be adjusted, eDRX timers may be adjusted, and PSM related timers (i.e. the active timer and Registration Are Update timer) may be adjusted. Such optimizations will result in decreased power consumption for the UE and prolong battery life until charging can take place.

Many of the optimizations described above are controlled by the RAN part of the network. However, the RAN part of the network is not necessarily aware of whether a UE can be considered power constrained. As described earlier in the application, the core network may provide the RAN node with the UE's Battery Indication. The Battery Indication conveys the type of power source that the UE is currently relying on. The core network may additionally provide a Battery Level Indication which conveys information about the current battery level of the UE. This information may be used by the RAN to make the optimization decisions that were described earlier. For example, the RAN Node may determine the UE's RRM and PDCCH BD requirements should be reduced when the UE's battery level is below 25%.

Moreover, the core network is capable of determining a Battery Indication based on subscription information that is provisioned in the UDM/UDR by an Application Server. In some scenarios, a UE might not be associated with an application server that is not aware of the UE's Battery Indication. Thus, it is proposed that the UE indicate to the network its Battery Indication and Battery Level Indication.

### Preparing for a Battery Constrained Situation

When a UE establishes a PDU Session, the network provides the UE with an AMBR and QoS Rules for the PDU Session. When a UE has low battery level, it may be desirable to adjust the AMBR and QoS Rules that are applied to the UE's traffic. For example, when the UE's battery level is low, it would be desirable to increase the UE's allowed AMBR and to allow the UE to apply QFI markings to its traffic that will result in better treatment for the UE's traffic. Thus, the UE may be able to quickly complete sending any data that it needs to send and return to a sleep state, or a state where it uses relatively less power.

Therefore, according to even a further aspect of the application, when a PDU Session is established for REDCAP UEs, the network provide multiple AMBR values and multiple QoS Rules to the UE for the PDU Session. For example, the network may provide the UE with a first and second AMBR value and a first and second set of QoS Rules. The UE may apply the first AMBR value and first set of QoS Rules during normal circumstances and only apply the second AMBR value and second set of QoS Rules when the UE detects a low battery condition. When the UE detects that the low battery condition no longer exists, the UE may stop applying the second AMBR value and second set of QoS Rules and begin to apply the first AMBR value and first set of QoS Rules again.

The SMF may additionally provide the UPF with the first and second AMBR value and a first and second set of PDRs. The SMF may indicate to the UPF when the first or second AMBR value and when the first or second PDRs should be used (i.e. when the UE switches in and out of REDCAP mode).

The UE may use a battery level monitoring circuit to monitor the battery level and detect the low battery condition by comparing the observed battery level against a threshold. The threshold may be configured by a user interface or it may be received from the network (e.g., during PDU Session Establishment or Registration). The battery level information may be sent from the TE part of the UE to the MT part of the UE via an AT Command. Alternatively, a notification which notifies that the battery level is below the threshold may be sent from the TE part of the UE to the MT part of the UE via an AT Command.

When the UE detects a lower battery level, and the UE is a REDCAP UE, it may send a NAS message to the AMF or SMF indicating that a low battery level has been detected. The message may also indicate to the SMF that the second AMBR value and second set of QoS Rules will now be applied for a PDU Session. The NAS message that carries this information may be a PDU Session Modification message. If the second AMBR value and second set of QoS Rules was not provided to the UE during PDU Session Establishment, the SMF may provide the values to the UE in the PDU Session Modification Command.

The UE Application may use a battery level monitoring circuit to monitor the battery level and detect the low battery condition by comparing the observed battery level against a threshold. The UE Application may send information about the UE's battery level to an Application Server (i.e. an AF). The AF may then notify the network that the UE's battery level is low or has increased above a threshold. The information from the AF may be placed in the UDR via an NEF request. The information in the UDR may then be sent to the UE's AMF or an SMF that is serving a PDU Session of the UE. Upon receiving the updated information, the AMF or SMF may notify the UE that the UE may begin operating in low power mode (i.e. apply the second AMBR value and second set of QoS Rules). When the notification is sent from the SMF, the notification may be a PDU Session Modification Command and the message may include the second AMBR value and second set of QoS Rules.

### Battery Information in RRC Messaging

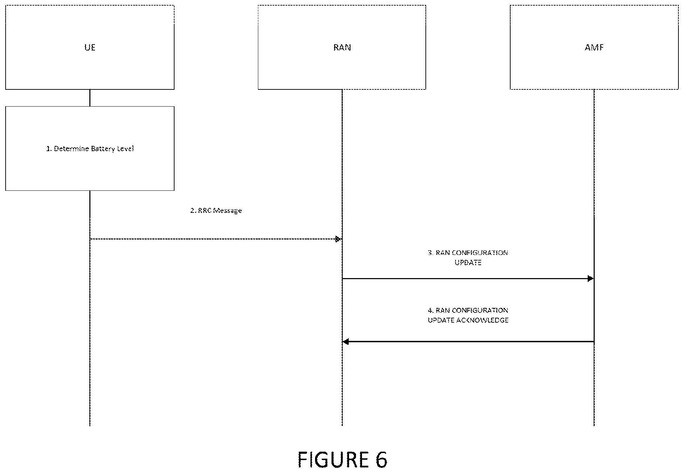

According to even yet a further aspect of the application, the UE may indicate its Battery Level Indication to the network in an RRC message. An example procedure for how the UE may send its Battery Level Indication to the network in an RRC message is shown in Figure 6. Note the Battery Level Indication may alternatively be an indication that the UE is going to operate in REDCAP mode of operation and hence triggering REDCAP capabilities of the UE. Each of the steps of Figure 6 is denoted by an Arabic numeral as follows:

In step 1, the UE determines its battery level. An Application that is hosted on the TE part of the UE invokes an AT Command and the AT Command provides the battery level and power source information to the MT part of the UE.

In step 2, the UE sends an RRC Message to the RAN node. The message includes the Battery Level Indication and Battery Indication or alternatively, an indication that the UE will begin operating in REDCAP mode. The RAN node may verify that the UE is a REDCAP UE and is authorized to send the Battery Level Indication and Battery Indication or REDCAP operational mode indication.

In step 3, the RAN node provides the Battery Level Indication and Battery Indication or the REDCAP operational mode indication to the AMF. The Battery Level Indication and Battery Indication or the REDCAP operational mode indication may be sent to the AMF in a RAN CONFIGURATION UPDATE message.

In step 4, the AMF may acknowledge the message in a RAN CONFIGURATION UPDATE ACKNOWLEDGE message. The acknowledge message from the AMF may indicate whether the UE authorized to send a Battery Level Indication and Battery Indication to the network or the UE is able to operate in REDCAP mode of operation.

### Battery Information in NAS Messaging

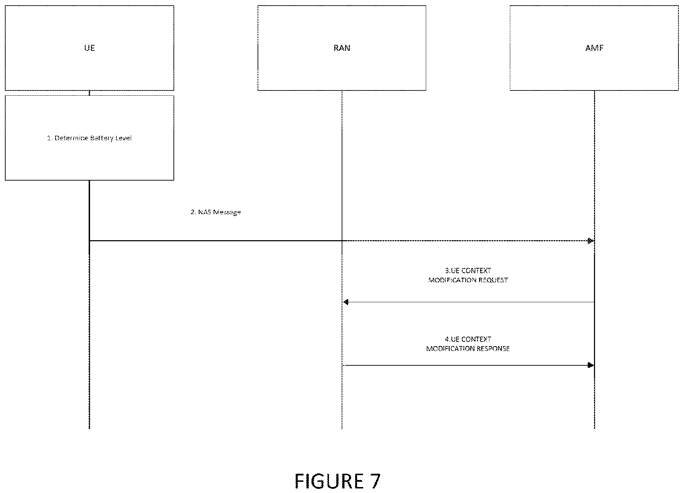

According to even yet another aspect of the application, the UE may indicate its Battery Level Indication, or REDCAP mode of operation, to the network in an NAS message. An example procedure for how the UE may indicate its Battery Level Indication to the network in an NAS message is shown in Figure 7. Each step of Figure 7 is denoted by an Arabic numeral as follows:

In step 1, the UE determines its battery level. An Application that is hosted on the TE part of the UE invokes an AT Command and the AT Command provides the battery level and power source information to the MT part of the UE.

In step 2, the UE sends a NAS Message to the AMF node. The message includes the Battery Level Indication and Battery Indication.

In step 3, the AMF node verifies that the UE is a REDCAP UE and is authorized to send the Battery Level Indication and Battery Indication to the network. The AMF them provides the Battery Level Indication and Battery Indication to the RAN node. The information, or stationary indication, may be sent to the RAN Node in a UE CONTEXT MODIFICATION REQUEST message.

In step 4, the RAN Node may acknowledge the message in a UE CONTEXT MODIFICATION RESPONSE message.

### Notifying the UE of Reduced RRM Requirements

In even another exemplary aspect of the application, when the RAN node receives a notification that the UE is in a constrained power situation (e.g., low battery), the RAN node may reconfigure the UE's RRM (i.e. reduce the UE's RRM requirements). When the RAN node informs the UE that the UE's RRM requirements have been reduced, the MT may send a notification about the reduced RRM requirements to an application that is hosted in the TE part of the UE and information about the reduced RRM requirements may be displayed on a UE. The notification that is sent from the network to the UE may further indicate why RRM requirements are being reduced (e.g., because of the detected low battery condition). This information may further be sent from the MT part of the UE to the TE part of the UE so that it can be displayed on a user interface.

### New Access Class for Power/Battery Constrained Devices

In another exemplary aspect of the application, a new Access Class, called Power Constrained Access, may be defined for battery or power constrained UEs. When the UE uses any of the earlier described methods to detect that it is in a power, or battery constrained state, the UE may use this access class when establishing an RRC connection. The network may give preferential treatment to the RRC connection so that the UE is more likely to successfully connect to the network and send and receive data. Thus, increasing the likelihood that the UE can complete some data transfer before the UE's power supply is too low.

When the UE uses any of the earlier described methods to detect that it is no longer in a power, or battery constrained state, the UE may use this access class when establishing an RRC connection.

The UE may indicate to the network that it supports the Power Constrained Access Class and the network may indicate to the UE that it is allowed to use the Power Constrained Access Class. The support indication and the indication that the UE is allowed to use the Power Constrained Access Class may be sent to the RAN Node via RRC signaling and may be sent to the AMF via NAS signaling.

Instead of defining a new access class, the UE may use the existing Exception Data Access class when establishing an RRC connection under low power conditions. However, the disadvantage to using the Exception Data Access class under low power conditions is that the Exception Data Access indicates the importance of data. Thus, the network would not be able to determine if the Access Class is being used because the data itself is important, if the UE is in a low power state, or both.

As described earlier, Access Categories numbers 32-63 are reserved for operator use. Operators may use NAS signaling to configure definitions for each of these categories in the UE. The definitions may be based on what Data Network Name (DNN) the access is associated with, what Single-Network Slice Selection Assistance Information (S-NSSAI) the access is associated with, etc. The system may be enhanced so that the network may configure the UE to associate certain access category numbers to REDCAP UEs or REDCAP Service Types (e.g., e-Health, wearables, sensors, etc.).

### NWDAF Detection of the Low Power Condition

In even a further exemplary aspect of the application, the NWDAF may detect that the UE is in a low power state or stationary based on observed UE behavior and collected analytics information. For example, the NWDAF may collect information, or analytics, about a UE from an AF, AMF, SMF, and/or UPF. The Battery Indication may indicate to the NWDAF if the UE is plugged in or not. Information that is collected from the AMF, SMF, and UPF may be used to determine if the UE has recently performed a lot of data transfer activity and/or has often been in the CM-CONNECTED state for a relatively longer period of time or may indicate the UE's mobility patterns. Based on these observations, the NWDAF may determine that the UE is likely in a low power state. The NWDAF may notify the AMF that the UE is likely in a lower power. The AMF may notify the UE that it may behave as if it is in a low power state or behave as if it is stationary. The AMF may notify the SMF that the UE that it may behave as if it is in a low power state or behave as if it is stationery UE. As described earlier, the SMF may notify the UE that the UE may behave as if it is in a low power state and modify the UE's PDU Session via a PDU Session Modification Command. The AMF may notify the UE that the UE may behave as if it is stationary.

### Considerations Related to Reduced Services for REDCAP LTEs

As described earlier, a REDCAP UE, or a UE that is operating in REDCAP mode, might not be "slice aware". In other words, the UE might not have an S-NSSAI in its Allowed NSSAI or the UE might have a special S-NSSAI value in the Allowed NSSAI. When the UE is operating in this state, the UE may still have URSP Rules that contain S-NSSAI values. It may be inefficient for the network to provide the UE with special URSP Rules that contain no S-NSSAI values and only apply to REDCAP UEs. Thus, when a REDCAP UE evaluates URSP rules, the REDCAP UE may ignore an S-NSSAI in the traffic descriptor. Furthermore, when the UE sends a PDU Session Establishment request after URSP Evaluation, the UE may provide the AMF and SMF with a REDCAP indication and no S-NSSAI value so that the network knows the UE is a REDCAP UE and that the network (i.e. AMF) should assign an S-NSSAI to the PDU Session accordingly. The REDCAP indication may be sent in the NAS-MM part of the PDU Session Establishment Request so that it may be recognized by the AMF.

### Considerations Related to Improved Services for REDCAP UEs

As described earlier, TS 22.261 states, "The 5G system shall be able to give priority to services (e.g. e-Health) when resources are limited." Currently, the 5G System is not aware of what services are provided to a UE or what services the UE is accessing. It is proposed that the REDCAP Indication that was described earlier further indicate what types of services are provided by the UE. For example, the REDCAP Indication may indicate that the UE is a REDCAP UE and provides e-Health services. During the Registration procedure, the network may verify that the UE is permitted to behave as a REDCAP UE and is permitted to receive priority treatment as an e-Health device. The network may reply to the UE with separate indication to indicate if the UE is authorized to behave as a REDCAP UE and to indicate if the UE will receive priority treatment as an e-Health device. It should be appreciated that the same idea could apply to a UE that indicates that it is a Vehicular Sensor, Security Camera, Critical Sensor, etc.

If the UE receives permission to operate as an e-Health device, it may be allowed to use the exception data RRC establishment cause or a new REDCAP priority RRC establishment cause code.

When the AMF determines that the UE is allowed to receive priority as an e-Health device (or any other prioritized device type), the AMF may inform the RAN node so that the RAN node is aware that the device is permitted to request and receive priority services.

When a REDCAP UE establishes a PDU Session, the UPF that is associated with the PDU Session may be configured with PDRs to detect when the UE is sending or receiving high priority traffic (i.e. traffic that is associated with a high priority service). When high priority traffic is detected, the SMF may notify the RAN node that the UE is now accessing high priority services. The RAN node may then give higher priority to the UE's traffic.

### Considerations Related to UEs that Violate REDCAP Limitations

A REDCAP UE may be limited in how much it moves, limited in terms of data rates, limited in terms of number if PDU Sessions, etc.

### An AMF may Detect that a UE has Violated a REDCAP Limitations.

For example, the NWDAF may notify the AMF that the UE's registration area updates are too frequent, that the UE's detected velocity is too high, that the UE's handovers are too frequent, etc.

For example, an SMF may notify the AMF that the UE has violated the AMBR that is associated with a PDU Session and that packets are being dropped by the network.

For example, the AMF may detect that the LTE has established, or attempted to establish, more than the maximum number of PDU Sessions that the operator will allow for REDCAP UEs.

When the AMF detect that the UE has violated, or has attempted to violate, a REDCAP limitation, the AMF may send a NAS notification to the LTE notifying the LTE of the violation, or attempted violation. The AMF may, instead, send a LTE Configuration Update command to the UE notifying the UE that it may no longer operate in REDCAP mode.

While the systems and methods have been described in terms of what are presently considered to be specific aspects, the application need not be limited to the disclosed aspects. It is intended to cover various modifications and similar arrangements included within the spirit and scope of the claims, the scope of which should be accorded the broadest interpretation so as to encompass all such modifications and similar structures. The present disclosure includes any and all aspects of the following claims.

The following numbered paragraphs provide further example aspects and features of the present technique:
Paragraph 1. An apparatus comprising:
   a non-transitory memory including instructions stored thereon; and
   a processor, operably coupled to the non-transitory memory, configured to execute the instructions of:
      determining a preference to operate in a reduced capacity (REDCAP) mode in a network;
      transmitting, via a radio resource control (RRC) message to a radio access network (RAN) node of the network, a registration request including a first and second indication to operate in the REDCAP mode, where the first indication prompts a selection of an access and mobility function (AMF) configured to authorize the apparatus to operate in the REDCAP mode and communicate with the apparatus, and where the second indication is sent to a session management function (SMF) to prompt determining characteristics of a protocol data unit (PDU) session of the apparatus; and
      receiving, from the network, a response to the registration request based on the AMF authorization and SMF determination.
Paragraph 2. The apparatus of paragraph 1, wherein the response indicates a rejection to operate in the REDCAP mode based on the AMF authorization.
Paragraph 3. The apparatus of paragraph 1, wherein the response indicates a rejection based on the REDCAP mode being unsupported in the network.
Paragraph 4. The apparatus of paragraph 1, wherein the processor is further configured to execute the instructions of:
   determining an acceptance of the registration request to operate in the REDCAP mode; and
   sending, via another RRC message to another RAN node of the network, an indication of the acceptance of the registration request.
Paragraph 5. The apparatus of paragraph 1, wherein the transmission occurs when an attention command is invoked.
Paragraph 6. The apparatus of paragraph 5, wherein the processor is further configured to execute the instructions of notifying, via the attention command, an application of an operational status in the REDCAP mode.
Paragraph 7. The apparatus of paragraph 5, wherein the attention command triggers transmission of another RRC message to the network indicating a trajectory or indicating a stationary state.
Paragraph 8. The apparatus of paragraph 5, wherein the attention command triggers transmission of a non-access stratum message to the network indicating a trajectory or indicating a stationary state.
Paragraph 9. The apparatus of paragraph 1, wherein the processor is further configured to execute the instructions of:
   receiving a capability inquiry message; and
   sending a capability information message including one or more of an indication of a number of wireless transmit/receive units (WTRUs), receiving/transmitting antennas, reduced supported bandwidth, support for half-duplex-FDD, relaxed WTRU processing time, and relaxed WTRU processing capabilities.
Paragraph 10. The apparatus of paragraph 1, wherein the processor is further configured to execute the instructions of:
   receiving another RRC message including trajectory information or a stationary indication; and
   sending, based on the received another RRC message and via an attention command, trajectory information or a stationary indication to a WTRU application.
Paragraph 11. A method comprising:
   receiving a registration request message from a wireless transmit/receive unit (WTRU);
   receiving an indication the WTRU is operating in a reduced capacity (REDCAP) mode;
   sending, to a network function in a core network, a message requesting to check whether the WTRU is authorized to operate in the REDCAP mode;
   receiving, from the network function, a reply indicating an authorization status of the WTRU to operate in the REDCAP mode; and
   sending, to the WTRU, a registration response message based on the authorization to operate in the REDCAP mode.
Paragraph 12. The method of paragraph 11, further comprising:
   sending, to another network function in the core network, an indication the WTRU is authorized to operate in the REDCAP mode, where the indication prompts a determination of characteristics of a protocol data unit (PDU) session of the WTRU.
Paragraph 13. The method of paragraph 11, further comprising:
   receiving, from the WTRU, a non-access stratum message indicating a trajectory or stationary state.
Paragraph 14. The method of paragraph 11, wherein the authorization status is rejected based on one or more of the WTRU authorization check and the core network not supporting the REDCAP mode.
Paragraph 15. The method of paragraph 11, further comprising:
   receiving a capability information message including one or more of an indication of a number of WTRUs, receiving/transmitting antennas, reduced supported bandwidth, support for half-duplex-FDD, relaxed WTRU processing time, and relaxed WTRU processing capabilities.
Paragraph 16. A method comprising:
   determining a preference to operate in a reduced capacity (REDCAP) mode in a network;
   transmitting, via a radio resource control (RRC) message to a radio access network (RAN) node of the network, a registration request including a first and second indication to operate in the REDCAP mode, where the first indication prompts a selection of an access and mobility function (AMF) configured to authorize the REDCAP mode and communicate with an apparatus, and where the second indication is sent to a session management function (SMF) to prompt determining characteristics of a protocol data unit (PDU) session of the apparatus; and
   receiving, from the network, a response to the transmitted registration request based on the AMF authorization and SMF determination.
Paragraph 17. The method of paragraph 16, wherein the response indicates a rejection to operate in the REDCAP mode based on the AMF authorization.
Paragraph 18. The method of paragraph 16, wherein the response indicates a rejection based on the REDCAP mode being unsupported in the network.
Paragraph 19. The method of paragraph 18, wherein the transmission occurs when an attention command is invoked.
Paragraph 20. The method of paragraph 16, further comprising:
   determining an acceptance of the registration request to operate in the REDCAP mode; and
   sending, via another RRC message to another RAN node on the network, an indication of the acceptance of the registration request.

## Claims

1. A wireless transmit/receive unit, WTRU (102), operating in a reduced capacity, REDCAP, mode, the WTRU comprising:
a non-transitory memory including instructions stored thereon; and
a processor, operably coupled to the non-transitory memory, configured to execute the instructions of:
sending a registration request message with an indication of the WTRU (102) operating in the REDCAP mode, wherein a first network function in a core network (106; 107; 109) is configured to send a message requesting subscription information of the WTRU to a second network function in the core network (106; 107; 109), receive the subscription information of the WTRU from the second network function, and determine whether the WTRU is authorized to operate in the REDCAP mode based upon the received subscription information;
further **characterized by** the step of:
receiving a first indication based on the determined authorization for the WTRU to operate in the REDCAP mode, wherein the first network function is configured to send a second indication based on the determined authorization to a session management function, SMF, wherein the second indication indicates the WTRU is operating in the REDCAP mode.

2. The WTRU of claim 1, wherein the first indication indicates the WTRU is authorized to operate in the REDCAP mode.

3. The WTRU of claim 1, wherein the processor is further configured to execute the instructions of:
sending a non-access stratum message to the first network function indicating a trajectory or stationary state.

4. The WTRU of claim 1, wherein the processor is further configured to execute the instructions of:
sending a capability information message comprising any one or more of an indication of a number of receiving/transmitting antennas, a list of supported reduced bandwidths, a support for half-duplex-FDD, a relaxed WTRU processing time, or a relaxed WTRU processing capability.

5. The WTRU of claim 1, wherein the first network function is configured to determine whether the WTRU is authorized to operate in the REDCAP mode based upon the core network supporting the REDCAP mode.

6. The WTRU of claim 5, wherein the processor is further configured to execute the instructions of:
receiving a network slice for the first network mode, wherein the network slice is dedicated for supporting REDCAP mode.

7. The WTRU of claim 1, wherein the first or second indication prompts a determination of characteristics of a protocol data unit, PDU, session with the WTRU.

8. A method performed by a wireless transmit/receive unit, WTRU (102), operating in a reduced capacity, REDCAP, mode, the method comprising:
sending a registration request message with an indication of the WTRU (102) operating in the REDCAP mode, wherein a first network function in a core network (106; 107; 109) is configured to send a message requesting subscription information of the WTRU to a second network function in the core network (106; 107; 109), receive the subscription information of the WTRU from the second network function, and determine whether the WTRU is authorized to operate in the REDCAP mode based upon the received subscription information;
the method being **characterized in** the step of:
receiving a first indication based on the determined authorization for the WTRU to operate in the REDCAP mode, wherein the first network function is configured to send a second indication based on the determined authorization to a session management function, SMF, wherein the second indication indicates the WTRU is operating in the REDCAP mode.

9. The method of claim 8, wherein the first indication indicates the WTRU is authorized to operate in the REDCAP mode.

10. The method of claim 8, further comprising:
sending a non-access stratum message to the first network function indicating a trajectory or stationary state.

11. The method of claim 8, further comprising:
sending a capability information message comprising any one or more of an indication of a number of receiving/transmitting antennas, a list of supported reduced bandwidths, a support for half-duplex-FDD, a relaxed WTRU processing time, or a relaxed WTRU processing capability.

12. The method of claim 8, wherein the first network function is configured to determine whether the WTRU is authorized to operate in the REDCAP mode based upon the core network supporting the REDCAP mode.

13. The method of claim 12, further comprising:
receiving a network slice for the first network mode, wherein the network slice is dedicated for supporting REDCAP mode.

14. A system comprising:
a wireless transmit/receive unit, WTRU (102), operating in a reduced capacity, REDCAP, mode, the WTRU comprising a non-transitory memory including instructions stored thereon, and a processor, operably coupled to the non-transitory memory; and
a first network function in a core network (106; 107; 109), the first network function comprising a non-transitory memory including instructions stored thereon, and a processor, operably coupled to the non-transitory memory:
wherein the processor of the WTRU is configured to execute the instructions of:
sending a registration request message with an indication of the WTRU (102) operating in the REDCAP mode, wherein the processor of the first network function in the core network (106; 107; 109) is configured to send a message requesting subscription information of the WTRU to a second network function in the core network (106; 107; 109), receive the subscription information of the WTRU from the second network function, and determine whether the WTRU is authorized to operate in the REDCAP mode based upon the received subscription information;
further **characterized by** the processor of the WTRU configured to execute the instructions of:
receiving a first indication based on the determined authorization for the WTRU to operate in the REDCAP mode, wherein the processor of the first network function is configured to send a second indication based on the determined authorization to a session management function, SMF, wherein the second indication indicates the WTRU is operating in the REDCAP mode.

15. The system of claim 14, wherein the first indication indicates the WTRU is authorized to operate in the REDCAP mode.
